(19) Europäisches Patentamt
European Patent Office
Office européen des brevets

(11) Veröffentlichungsnummer: **0 036 211**
**A1**

(12) # EUROPÄISCHE PATENTANMELDUNG

(21) Anmeldenummer: **81101958.7**

(22) Anmeldetag: **17.03.81**

(51) Int. Cl.³: **C 08 F 10/00**
C 08 F 4/64, C 08 F 4/62
C 08 F 4/68

(30) Priorität: **17.03.80 DE 3010202**
**08.07.80 DE 3025759**

(43) Veröffentlichungstag der Anmeldung:
**23.09.81 Patentblatt 81/38**

(84) Benannte Vertragsstaaten:
**AT BE DE FR GB IT NL**

(71) Anmelder: **WACKER-CHEMIE GMBH**
**Prinzregentenstrasse 22**
**D-8000 München 22(DE)**

(72) Erfinder: **Kurz, Dieter, Dr., Dipl.-Chem.**
**Langdörfferstrasse 12a**
**D-8263 Burghausen(DE)**

(54) **Verfahren zur Polymerisation von alpha-Olefinen.**

(57) Polyäthylen mit breiter Molekulargewichtsverteilung kann hergestellt werden in Gegenwart eines in zwei Reaktionsschritten A und B hergestellten Katalysatorfeststoffes aus einem Magnesium und Chlor enthaltenden Primärfeststoff, der in einer Reaktionsstufe A mit Alkoxyverbindung(en) von Elementen der I.-VI. Gruppen des Periodensystems, welche mindestens 1 sekundäre oder tertiäre Alkoxygruppe enthält (enthalten), und mit Halogen enthaltenden Metallverbindungen von Elementen der IV. und/oder V. Nebengruppe(n) des Periodensystems und in einer Reaktionsstufe B mit Halogen enthaltenden Metallverbindungen der IV. und/oder V. Nebengruppe(n) und Metallorganylverbindung(en) der II. und/oder III. Hauptgruppe(n) des Periodensystems umgesetzt worden ist. Die Reihenfolge der Reaktionsschritte A und B ist nicht entscheidend für den Erfolg des Verfahrens.

EP 0 036 211 A1

W A C K E R - C H E M I E
G M B H

München, 11. Juni 1980
LC-PAT/Dr.Da/ra

Wa 7951/7956/8028-L

# Verfahren zur Polymerisation von alpha-Olefinen

Die Polymerisation von α-Olefinen, insbesondere Äthylen, mit Hilfe von Katalysatorfeststoffen, die Elemente der IV. und/oder V. Nebengruppe des Periodensystems, Magnesium, Halogen, Sauerstoff und gegebenenfalls Bor oder Aluminium enthalten und mit Aluminiumalkylen aktiviert werden, in der Gasphase oder in Kohlenwasserstoffen als Verdünnungs- und Dispergiermittel ist bekannt.

Da die Eigenschaften der so hergestellten Polyolefine sehr stark vom eingesetzten Katalysator abhängen, wurden bereits verschiedenartige Katalysatorsysteme zur Polymerisation von α-Olefinen vorgeschlagen.

Die meisten bisher bekannten, mit Aluminiumalkylen aktivierten Katalysatorfeststoffe liefern bei der Polymerisation von α-Olefinen Produkte mit enger Molekulargewichtsverteilung, d. h., der mittlere Polymerisationsgrad eines bei einem Polymerisationsansatz hergestellten Polyolefingemisches liegt in einem engen Bereich. Diese enge Molekulargewichtsverteilung des Polymerisates bewirkt, daß daraus hergestellte Extrudate infolge "Schmelzbruches" rauhe Oberflächen aufweisen, so daß diese Polymerisate für viele Verwendungen, z. B. zur Herstellung von Hohlkörpern und Folien, ungeeignet sind.

BAD ORIGINAL

Es stellte sich daher die Aufgabe, Polyolefine mit breiter Molekulargewichtsverteilung herzustellen.

Von den wenigen bekannten Katalysatorsystemen, die Produkte mit breiter Molekulargewichtsverteilung liefern, ist ein Großteil technisch nicht brauchbar, weil das Polymerisationprodukt in seinen Korneigenschaften nicht den bei der Polymerisation, Aufarbeitung und Weiterverarbeitung zu stellenden Anforderungen genügt oder weil die Molekulargewichtsverteilung für viele Anwendungsgebiete noch nicht breit genug ist.

Ein anderer Teil dieser Katalysatorsysteme besitzt keine genügend hohe Katalysator-Aktivität, so daß größere Mengen eingesetzt werden müssen, die ins Polymerisat gelangen, dessen Eigenschaften, insbesondere Stabilität beeinträchtigen und daher durch aufwendige Folgeprozesse unschädlich gemacht oder entfernt werden müssen.

Ein weiterer Teil dieser bekannten Systeme liefert nur dann Produkte mit breitverteilten Molekulargewichten, wenn die Polymerisation in Gegenwart spezieller, genau einzuhaltender Aktivatormischungen, ein anderer, wenn die Polymerisation in Gegenwart zusätzlicher Hilfsstoffe, welche anschließend wieder aus dem Polymerisationsmedium entfernt werden müssen, durchgeführt wird.

Ein weiterer Teil solcher bekannter Systeme scheidet für den großtechnischen Einsatz aus, weil die physikalischen Eigenschaften, wie Steifigkeit, Schlagzähigkeit und Spannungsrißbeständigkeit der aus dem Polymerisationsprodukt hergestellten Formkörper für viele Anwendungszwecke nicht ausreichend sind.

Manche Katalysatoren verfärben auch das Produkt. Diese unerwünschten Verfärbungen werden hauptsächlich durch Katalysatorreste hervorgerufen, die darüberhinaus vielfach die Lichtstabilität des Produktes beeinträchtigen.

BAD ORIGINAL

Als Beispiel für einen bisher bekannten Katalysator wird auf die DE-OS 26 35 298 verwiesen. Dieser Katalysator wird durch Mahlen eines Gemisches aus Magnesiumhalogenid, Alkoxyaluminiumhalogenid, einer vierwertigen und einer dreiwertigen Titanverbindung hergestellt. Bei der Polymerisation tritt jedoch Wandanlage auf, die Polymerisate selbst besitzen schlechte Pulverrheologie, niedrige Schüttdichte und hohen Feinanteil.

Aufgabe der Erfindung war es daher, ein Polymerisationsverfahren für alpha-Olefine zur Verfügung zu stellen, das Produkte breiter Molekulargewichtsverteilung, guter physikalischer Eigenschaften, guter Verarbeitbarkeit und guter Reinheit liefert.

Diese Aufgabe wird durch die vorliegende Erfindung gelöst.

Gegenstand der Erfindung ist ein Verfahren zur diskontinuierlichen oder kontinuierlichen Polymerisation von alpha-Olefinen in der Gasphase oder in Kohlenwasserstoffen als Dispergiermittel bei Drücken von 2 - 40 bar, vorzugsweise bis etwa 15 bar, und Temperaturen von 60 bis 100 °C gegebenenfalls unter Verwendung von Wasserstoff als Molekulargewichtsregler in Gegenwart eines Feststoffes als Katalysator, der Elemente der IV. und/oder V. Nebengruppe(n) des Periodensystems der Elemente, Magnesium, Halogen, Sauerstoff und gegebenenfalls ein (weiteres) Element der II. und/oder III. Hauptgruppe(n) des Periodensystems enthält und mit Metallorganylverbindungen der II. und/oder III. Hauptgruppe(n) des Periodensystems aktiviert wird, dadurch gekennzeichnet, daß der anschließend in der Polymerisation von alpha-Olefinen noch zu aktivierende Katalysator durch Umsetzung eines Magnesium und Halogen enthaltenden Primärfeststoffes in zwei aufeinanderfolgenden Reaktionsstufen A und B hergestellt wird, wobei der Feststoff auf Basis von Magnesiumverbindung(en)
in Reaktionsstufe A mit Alkoxyverbindung(en) eines oder mehrerer Elemente(s) der I., II., III., IV., V. und/oder VI.
Gruppe(n) des Periodensystems und Halogen enthaltender(n) Metallverbindung(en) eines oder mehrerer Elemente(s) der IV. und/oder V. Nebengruppe(n) des

BAD ORIGINAL

Periodensystems behandelt wird und

in Reaktionsstufe B mit Halogen enthaltender(n) Metallverbindung(en) von Elementen der IV. und/oder V. Nebengruppe(n) und mindestens einer Metallorganylverbindung der II. und/oder III. Hauptgruppe(n) des Periodensystems umgesetzt wird.

Unter "einer ein Element enthaltenden" Verbindung wird hier verstanden, daß das besagte Element in der besagten Verbindung chemisch gebunden ist, unter Periodensystem das nach Mendeleev (vgl. Handbook of Chemistry and Physics, 55. Auflage, Umschlaginnenseite).

Als alpha-Olefine, die nach dem erfindungsgemäßen Verfahren polymerisiert werden können, können alle alpha-Olefine eingesetzt werden, die bereits bisher bei Drücken von etwa 2 - 40 bar in Gegenwart von Feststoffkatalysatoren des sogenannten "Ziegler-Types" polymerisiert werden konnten. Bevorzugt wird Äthylen, das gegebenenfalls im Gemisch mit bis zu 10 mol% an $\alpha$-Olefinen mit 3 - 6 Kohlenstoffatomen eingesetzt und copolymerisiert werden kann.

Zur Herstellung des in dem erfindungsgemäßen Verfahren verwendeten Katalysators geht man von einem Primärfeststoff aus, der Magnesium und Halogen enthält.

Dieser Primärfeststoff kann vorzugsweise hergestellt werden, indem in Kohlenwasserstoffen lösliche Magnesiumverbindung(en) mit Chlorkohlenwasserstoff- und/oder Chlorkohlenstoffverbindung(en) jeweils mit 1 - 6 Kohlenstoffatomen umgesetzt wird (werden), von denen wenigstens eines mindestens zwei Chloratome direkt gebunden trägt.

In Kohlenwasserstoffen lösliche geeignete Magnesiumverbindungen werden einzeln oder als Gemisch eingesetzt, insbesondere magnesiumorganische Verbindungen der allgemeinen Formeln $R^1MgR^2$ und/oder $R^1MgOR^2$, in denen $R^1$ und $R^2$ gleiche oder verschiedene ge-

BAD ORIGINAL

radkettige oder verzweigte Alkyl- oder Arylreste mit 2 bis 20 C-Atomen bedeuten.

Besonders bevorzugt werden $R^1MgR^2$-Verbindungen, wie z. B. n-Butyläthylmagnesium, Di-n-butylmagnesium, n-Butyl-isobutylmagnesium, n-Butyl-sec-butylmagnesium, Di-n-hexylmagnesium, Di-n-pentylmagnesium, Di-n-octylmagnesium, Diphenylmagnesium oder Gemische dieser Verbindungen.

Diese magnesiumorganischen Verbindungen werden besonders vorzugsweise mit gesättigten Chlorkohlenwasserstoff- und/oder Chlorkohlenstoffverbindungen umgesetzt, wie Tetrachlorkohlenstoff, 1,1,1-Trichloräthan, 1,1,2-Trichloräthan, 1,1,2,2- und 1,1,1,2-Tetrachloräthan, Pentachloräthan, Hexachloräthan oder Gemischen dieser Verbindungen. Besonders bevorzugt wird jedoch Chloroform eingesetzt.

Die Magnesiumverbindung(en) und die organische Chlorverbindung, z. B. besonders vorzugsweise Chloroform, werden vorzugsweise in Mengen von 0,5 bis 10, besonders vorzugsweise 1 bis 4, mol Chlorverbindung je mol Magnesiumverbindung, vorzugsweise bei Temperaturen von -10 °C bis +150 °C, insbesondere 20 bis 80 °C unter Rühren umgesetzt.

Hierbei ist die Reaktionszeit und der Verdünnungsgrad der Reaktanten weitgehend unkritisch. Die Reaktion kann binnen weniger Minuten oder einiger Stunden durchgeführt werden, z. B. in 30 bis 120 Minuten. Der Verdünnungsgrad kann in weiten Grenzen variiert werden, z. B. kann die organische Chlorverbindung, wie das besonders bevorzugte Chloroform, in reiner Form oder in Kohlenwasserstoffen gelöst,verwendet werden. Die magnesiumorganische Verbindung muß vor Einsetzen der Reaktion allerdings homogen in Kohlenwasserstoffen gelöst sein.

Die Reaktion kann in der Weise durchgeführt werden, daß die organische Chlorverbindung zur gelösten Magnesiumverbindung unter Rühren zudosiert wird oder daß beide Reaktanten gleichzeitig in

BAD ORIGINAL

das Reaktionsgefäß unter Rühren eindosiert werden. Bevorzugt werden jedoch die organischen Chlorverbindungen der vorstehend definierten Art, besonders vorzugsweise Chloroform, in reiner Form oder homogen in Kohlenwasserstoff gelöst vorgelegt und die Kohlenwasserstofflösung der magnesiumorganischen Verbindung(en) unter Rühren zudosiert, da auf diese Weise ein für das erfindungsgemäße Verfahren besonders gut geeigneter Katalysatorfeststoff hergestellt werden kann.

Der auf die geschilderte Weise hergestellte Chlor und Magnesium enthaltende Primärfeststoff kann direkt weiterverwandt oder aber vorzugsweise vor der weiteren Behandlung mehrmals mit Kohlenwasserstoffen gewaschen werden.

Der Primärfeststoff wird dann mit Kohlenwasserstoff(en) versetzt, so daß eine rührfähige Suspension entsteht. Die Konzentration ist nicht entscheidend, jedoch sollte sie wegen der besseren Handhabung und der besseren weiteren Umsetzung in der nun folgenden ersten Reaktionsstufe möglichst konzentriert sein.

Die Reihenfolge der beiden aufeinanderfolgenden Reaktionsstufen A und B ist nicht entscheidend für den Erfolg des erfindungsgemäßen Polymerisationsverfahrens. So kann der in der vorstehend beschriebenen Weise hergestellte Primärfeststoff zunächst der Reaktionsstufe A unterworfen werden und nach Beendigung dieser Umsetzung entweder direkt oder nach einem zwischengeschalteten Reinigungsschritt in der Reaktionsstufe B weiter umgesetzt werden. Bevorzugt wird jedoch die umgekehrte Reihenfolge der Reaktionsstufen vorzugsweise unter Zwischenschaltung eines Reinigungsschrittes, also die Reaktionsstufe B vor Reaktionsstufe A durchgeführt.

Der Primärfeststoff (oder in der bevorzugten Ausführungsform der Herstellung des Katalysators der in der Reaktionsstufe B modifizierte Feststoff) wird in der Reaktionsstufe A mit Alkoxyverbindung(en) eines oder mehrerer Elemente(s) der I.,II.,III.,IV.,V. und/oder VI. Gruppe(n) des Periodensystems und mit Halogen enthaltender(n)

BAD ORIGINAL

Metallverbindung(en) eines oder mehrerer Elemente(s) der IV. und/oder V. Nebengruppe(n) des Periodensystems umgesetzt.

Hierbei ist es möglich, erst die genannte(n) Metallverbindung(en) der Nebengruppenelemente und dann die Alkoxyverbindung(en) zu dem (Primär-)Feststoff zu dosieren oder beide gleichzeitig zu dosieren, jedoch wird vorzugsweise zunächst die Suspension des (Primär-)Feststoffes mit der (den) Alkoxyverbindung(en) behandelt und anschließend die Metallverbindung(en) zugesetzt. Anstelle den (Primär-)Feststoff mit fertiger(n) Alkoxyverbindung(en) zu behandeln, kann (können) die Alkoxyverbindung(en) auch "in situ" in Anwesenheit des (Primär-)Feststoffes erzeugt werden, beispielsweise aus Aluminiumtrialkylverbindung(en) und Alkohol(en). Daran anschließend wird (werden) die Metallverbindung(en) des (der) Nebengruppenelemente(s) zugesetzt.

Selbstverständlich kann auch die Feststoffsuspension zu den genannten Reaktanten (Alkoxyverbindung und Nebengruppenmetallverbindung) zudosiert werden, hierbei sollte aber vorzugsweise der eine Reaktant nicht mit dem anderen Reaktanten zusammenkommen, bevor er mit dem gegebenenfalls in der Reaktionsstufe B modifizierten Feststoff zusammengegeben worden ist.

Die Umsetzung der Alkoxyverbindung(en) mit der Feststoffsuspension erfolgt vorzugsweise bei -20 bis 150 °C, besonders vorzugsweise bei 40 bis 100 °C, die der Metallverbindung mit der Feststoffsuspension vorzugsweise bei -20 °C bis 150 °C, besonders vorzugsweise bei 0 bis 150 °C, insbesondere bei 40 bis 100 °C.

Soweit die Halogen enthaltenden Metallverbindungen der IV. und/oder V. Nebengruppe(n) des Periodensystems flüssig sind, können sie als solche eingesetzt werden, vorzugsweise, wenn sie nicht flüssig sind, werden sie jedoch vorzugsweise möglichst konzentriert gelöst in Kohlenwasserstoffen eingesetzt.

BAD ORIGINAL

Die Reaktionszeiten in der Reaktionsstufe A hängen natürlich von der Reaktivität der Reaktanten und damit von der Reaktionsgeschwindigkeit ab, sie können von wenigen Minuten (z. B. 15 Minuten) bis zu mehreren Stunden (z. B. 6 Stunden) betragen.

Die Alkoxyverbindung(en) wird (werden) vorzugsweise in einer Menge von (insgesamt) 0,01 - 1, insbesondere 0,1 bis 0,5 Mol je Mol (Grammatom) an im Feststoff enthaltenem Magnesium, und die Metallverbindung(en) wird (werden) vorzugsweise in Mengen von (insgesamt) 1 - 50, insbesondere 1 - 15 Mol je Mol an Alkoxyverbindung(en) eingesetzt. Es kann selbstverständlich auch von diesen Bereichen abgewichen werden, jedoch wird die Aktivität des Katalysators insbesondere von der Menge der Alkoxyverbindung(en) beeinflußt, so daß es nicht bevorzugt ist, insbesondere bei der Menge der Alkoxyverbindung(en) vom genannten, bevorzugten Bereich abzuweichen.
Geeignete Alkoxyverbindungen sind Verbindungen von Elementen der I., II., III., IV., V. und VI. Haupt- und/oder Nebengruppen des Periodensystems, z. B. Li, Na, K, Rb, Cs, Be, Mg, Ca, Sr, Ba, Zn, Cd, B, Al, Ga, In, Tl, Sc, Y, La, Si, Ge, Sn, Ti, Zr, Hf, P, Sb, As, Bi, V, Nb, Ta, S, Se, vorzugsweise von K, Na, Mg, Ca, Zn, B, Al, Si, Ti, Zr, P, V, S, die wenigstens eine Alkoxygruppe besitzen, die sich von einem sekundären oder tertiären Alkohol ableitet. Diese Alkoxygruppe entspricht vorzugsweise einer der beiden Formeln

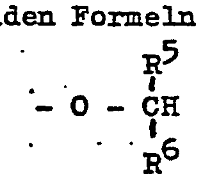

oder

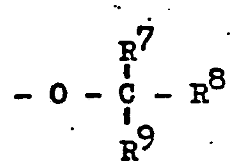

worin $R^5$, $R^6$, $R^7$, $R^8$ und $R^9$ unabhängig voneinander jeweils einer gesättigten geradkettigen oder verzweigten Alkylgruppe mit 1 bis 8 C-Atomen entsprechen, insbesondere Methyl, Äthyl oder Propyl, oder worin 2 dieser Reste $R^5$ bis $R^9$ zusammen eine Alkylenbrücke bilden, also einen sekundären oder tertiären, vorzugsweise gesättigten, gegebenenfalls durch Alkylgruppen, wie vorstehend definiert, substituierten Cycloalkoxyrest, insbesondere einen Cyclopentyl- oder einen Cyclohexyloxyrest bilden. Besitzen die Alkoxyverbindungen mehrere, z. B. 2 oder 3, solche Alkoxygruppen, so können diese gleich oder verschieden

BAD ORIGINAL

sein, meist sind sie jedoch gleich.

Die nicht von den genannten sekundären und/oder tertiären Alkoxygruppen abgesättigten Valenzen der genannten Elemente können durch Halogenatome, z. B. Fluor oder Brom, bevorzugt Chlor, durch Hydroxygruppen und/oder durch, vorzugsweise nur eine (je Atom von Elementen der I., II., III., IV., V. und/oder VI. Gruppen) primäre Alkoxygruppen der Formel $- O - R^{10}$, wobei $R^{10}$ eine gesättigte geradkettige oder verzweigte $C_1$-$C_9$-Alkylgruppe, insbesondere Methyl, Äthyl, Propyl oder Butyl bedeuten kann, abgesättigt sein.
Diese bevorzugten Verbindungen (a) können vielfach durch die Formeln

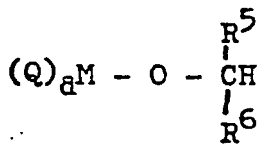

oder

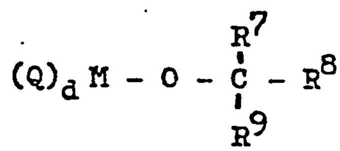

dargestellt werden, worin die Reste $R^5$ bis $R^9$ die oben genannten Bedeutungen besitzen, M ein Element der I., II., III., IV., V. und/oder VI. Haupt- oder Nebengruppe(n) und Q jeweils ein Wasserstoff, ein Halogenatom, eine Hydroxygruppe, eine gesättigte, geradkettige oder verzweigte Alkylgruppe mit 1 - 8 C-Atomen oder eine primäre, sekundäre oder tertiäre Alkoxygruppe der vorstehend definierten Art bedeuten. Obgleich dies durch die Formeln nicht ausgedrückt wird, können diese Verbindungen selbstverständlich auch dimer oder oligomer vorliegen. Der Index d kann je nach Wertigkeit des Elementes der I. - VI. Gruppen 0 bis 5, vorzugsweise 0 bis 3 betragen. Ist er nicht 0 oder 1, so können die Reste Q gleich oder verschieden sein und jeweils unabhängig von den anderen gebundenen Gruppen eine der vorstehend definierten Bedeutungen haben.

BAD ORIGINAL

Geeignete Alkoxyverbindungen sind auch solche, die aus den vorstehend genannten Verbindungen (a) mit jeweils mindestens einer Hydroxygruppe (zumindest formal) durch Kondensation unter Abspaltung eines Wassermoleküls gebildet werden können, also beispielsweise solche der Formel

$$R^{11} - O - \overset{(Q)_{d-1}}{M} - O \left[ \overset{(Q^1)_{d-1}}{M^1} - O \right]_c R^{12} \qquad (b)$$

worin M und $M^1$, Q und $Q^1$, sowie $R^{11}$ und $R^{12}$ jeweils gleich oder verschieden sein können, und M bzw. $M^1$ die oben für M angegebenen Bedeutungen und Q bzw. $Q^1$ die oben für Q angegebenen Bedeutungen besitzen können, worin $- O - R^{11}$ und $- O - R^{12}$ jeweils eine sekundäre oder tertiäre Alkoxygruppe bedeuten, wie sie vorstehend definiert sind, und c eine ganze Zahl bis etwa 20 oder größer, vorzugsweise bis 5, insbesondere 1 ist.

Weiterhin sind Alkoxyverbindungen (c), die mehrere der Elemente der I. - VI. Gruppen, insbesondere der I. - V. Gruppen enthalten, mit mindestens einer sekundären oder tertiären Alkoxygruppe der vorstehend definierten Art geeignet.

Die genannten Alkoxyverbindungen können einzeln oder als Gemische eingesetzt werden. Bevorzugt werden solche Alkoxyverbindungen, die gegenüber den bei der Herstellung des Katalysatorfeststoffes miteingesetzten Reaktionspartner nicht oxidierend wirken sowie im Falle der Alkoxyverbindungen von Elementen der II. und III. Hauptgruppen vorzugsweise keine Alkylgruppen besitzen.

Als einige Beispiele geeigneter Alkoxyverbindungen seien genannt:

Zu a) Lithium-, Natrium-, Kalium-tert.-butylat, -sec.-butylat und iso-propylat, Magnesium-, Zink-di-iso-propylat, -di-sec.-butylat, -di-tert.-butylat, -äthyl-iso-propylat, -äthyl-tert.-butylat, -äthylat-iso-propylat, -äthylat-tert.-butylat, -äthyl-sec.-butylat, -äthylat-sec.-butylat,

Borsäure-tri-isopropylester, Borsäure-tri-sec-butylester, Borsäure-tri-cyclohexylester, Borsäure-tri-tert.-butylester, Borsäure-tri-tert.-pentylester,

Aluminium-tri-isopropylat, Aluminium-tri-tert.-butylat, Aluminium-tri-sec-butylat, Aluminium-tri-cyclohexanolat, Aluminium-tris-(1-methylbutylat), Aluminium-tris-(1-äthylpropylat),

Aluminium-di-tert.-butylat-äthylat, Aluminiumisopropylat-di-tert.-butylat, Aluminium-di-isopropylat-tert.-pentylat, Di-isopropoxyaluminiumchlorid, Di-tert.-butoxyaluminiumchlorid, Di-sec-butoxyaluminiumchlorid, Dihydroxyaluminiumcyclohexanolat;

Silicium-, Germanium-, Zinn-, Titan-, Zirkon-, Hafnium-, tetra-iso-propylat, -tetra-tert.-butylat, -tetra-sec.-butylat, Methoxy-tri-iso-propoxysilan, Methoxy-tri-tert.-butoxysilan, Methoxy-tri-sec.-butoxysilan, Dimethoxy-di-iso-propoxysilan, Dimethoxy-di-tert.-butoxysilan, Diäthoxy-di-tert.-butoxysilan, Iso-propoxy-tri-tert.-butoxysilan, Tri-iso-propoxysilan, Tri-tert.-butoxysilan, Di-tert.-butoxy-dichlorsilan, tri-tert.-butoxychlorsilan, Methyl-tri-iso-propoxysilan, Methyl-tri-sec.-butoxysilan, Tri-tert.-butoxysilanol , Di-tert.-butoxysilandiol, Di-iso-propoxytitandichlorid, Tri-iso-propoxyzirkonchlorid, Di-iso-propoxyzirkondichlorid, Äthoxyzirkon-tri-tert.-butylat, Dimethoxyzirkon-di-tert.-butylat, tert.-Butoxyzinntrichlorid, Tri-tert.-butylphosphat, Tri-iso-propylphosphat, Tri-sec.-butylphosphat, Tri-tert.-butylvanadat, Tri-sec.-butylvanadat, Tri-iso-propylvanadat, Di-iso-propylsulfit, Di-sec.-butylsulfit, Di-tert.-butylsulfit;

Zu b) Metaborsäureisopropylester, Metaborsäure-sec-butylester, Metaborsäurecyclohexylester, basische Aluminiumalkoholate der Summenformel $Al_1(O\text{-}Isopropyl)_{2,1}O_{0,6}$ (vgl. DE-OS 10 63 591); Penta-tert.-butoxy-chlor-disiloxan, Hexa-tert.-butoxycyclotrisiloxan, Octa-isopropoxy-trisiloxan, Dititansaure-hexa-isopropylester.

Zu c) $M^{I}[Al(O\text{-}i\text{-}C_3H_7)_4]$ $M^{I}$ = Li, Na, K, Rb, Cs;

$M^{II}[Al(O\text{-}i\text{-}C_3H_7)_4]_2$ $M^{II}$ = Be, Mg, Ca, Sr, Ba, Zn;

$M^{III}[Al(O\text{-}i\text{-}C_3H_7)_4]_3$ $M^{III}$ = Al, Ga, In, Sc, Y, La, Ce, Pr, Nd, Sm, Gd, Dy, Ho, Er, Yb;

Ferner: U,Th $[Al(O\text{-}i\text{-}C_3H_7)_4]_4$,
$Zr(O\text{-}i\text{-}C_3H_7)_4 \cdot 2\ Al(O\text{-}i\text{-}C_3H_7)_3$,
$Zr(O\text{-}i\text{-}C_3H_7)_4 \cdot Al(O\text{-}i\text{-}C_3H_7)_3$,
Nb, $Ta(O\text{-}i\text{-}C_3H_7)_5 \cdot Al(O\text{-}i\text{-}C_3H_7)_3$,
Nb, $Ta(O\text{-}i\text{-}C_3H_7)_5 \cdot 2\ Al(O\text{-}i\text{-}C_3H_7)_3$,
$3\ Zn(O\text{-}i\text{-}C_3H_7)_2 \cdot Al(O\text{-}i\text{-}C_3H_7)_3$

Besonders bevorzugt von diesen Alkoxyverbindungen sind die Borsäureester, die Aluminiumalkoholate und die Kieselsäureester.

Unter den Halogen enthaltenden Metallverbindungen von Elementen der IV. und V. Nebengruppe(n) des Periodensystems werden hier bevorzugt die Verbindungen des Titans, des Zirkons und des Vanadins (Vanadiums) verstanden; von diesen wiederum werden die Titanverbindungen besonders bevorzugt.

Insbesondere haben sich in der Reaktionsstufe A der Katalysatorherstellung die Verbindungen der allgemeinen Formel

$$X_a\ Ti\ (OR^4)_{4-a}$$

und in der später eingehend beschriebenen Reaktionsstufe B der Katalysatorherstellung die Verbindungen der allgemeinen Formel

$$X'_b\ Ti\ (OR^3)_{4-b}$$

als geeignet erwiesen. In diesen Formeln bedeuten X und X' unabhängig voneinander jeweils Halogen, besonders bevorzugt jeweils Chlor, $R^3$ und $R^4$ unabhängig voneinander jeweils gleiche oder verschiedene geradkettige oder verzweigte Alkyl- und/oder Arylreste mit 1 bis 8 Kohlenstoffatomen und a und b unabhängig

voneinander jeweils 2, 3 oder 4, vorzugsweise 4. Die Verbindungen können jeweils rein oder als Gemische eingesetzt werden. Besonders bevorzugt ist jeweils Titantetrachlorid.

Wird die Reaktionsstufe A als erste Reaktionsstufe bei der Bereitung des Katalysators für das erfindungsgemäße Verfahren durchgeführt so wird der so modifizierte Feststoff nun vorzugsweise bei 0 bis 100 °C durch wiederholtes Waschen mit Kohlenwasserstoffen, Sedimentieren und Dekantieren weitgehend von löslichen Metall-, insbesondere Titan-, -Verbindungen befreit. Vorzugsweise wird er danach wiederum, wie bereits der Primärfeststoff vor der ersten Reaktionsstufe, in Kohlenwasserstoffen suspendiert. Hierbei gilt für die Konzentration wiederum das bereits dort gesagte. Sinngemäß wird auch verfahren, wenn die im folgenden beschriebene Reaktionsstufe B als erste Reaktionsstufe der Katalysatorbereitung durchgeführt wird.

Der in Reaktionsstufe A modifizierte Feststoff bzw. bei der bevorzugten Arbeitsweise, bei der die Reaktionsstufe A nach Reaktionsstufe B durchgeführt wird, der Primärfeststoff wird in Reaktionsstufe B mit mindestens einer Halogen enthaltenden Verbindung mindestens eines Elementes der IV. und/oder V. Nebengruppe(n) des Periodensystems, wie sie weiter oben bereits definiert worden ist (sind), und mit mindestens einer Metallorganylverbindung der II. und/oder III. Hauptgruppe(n) des Periodensystems umgesetzt.

Die Reaktion wird vorzugsweise bei -40 bis +100 °C, insbesondere bei -5 bis +70 °C durchgeführt, wobei vorzugsweise je Mol im Feststoff gebundenen Magnesiums 0,01 bis 5, insbesondere 0,1 bis 1, Mol an genannten Metallverbindungen der Nebengruppenelemente, insbesondere Titantetrachlorid, und je Mol besagter Metallverbindung der Nebengruppenelemente, vorzugsweise 0,3 bis 5, insbesondere 0,5 bis 2,5 Mol an genannten Metallorganylverbindungen der Hauptgruppenelemente eingesetzt werden.

BAD ORIGINAL

Unter einem Mol eines Substanzgemisches wird diejenige Stoffmenge verstanden, die theoretisch (Umsatz = 100 % der Theorie) mit der gleichen Menge eines Reaktionspartners reagiert je 1 Mol einer reinen Substanz, die in diesem Substanzgemisch enthalten ist.

Unter den Elementen der II. und III. Hauptgruppen des Periodensystems werden hier insbesondere Beryllium, Magnesium, Bor und Aluminium verstanden, vorzugsweise das Magnesium und besonders vorzugsweise das Aluminium.

Unter den Metallorganylverbindungen dieser Elemente werden solche verstanden, die die Metallatome an Alkyl- und/oder Arylreste mit jeweils 1 bis 20 Kohlenstoffatomen gebunden enthalten. Nicht durch diese genannten Reste gebundenen Valenzen der Metalle können weiterhin mit Wasserstoff und/oder Halogen, vorzugsweise Chlor, ferner auch mit Alkoxy-, Aryloxy- und/oder Siloxyresten mit jeweils 1 bis 20 Kohlenstoffatomen abgesättigt sein. Weiterhin können oligomere Alkylaluminiumverbindungen eingesetzt werden, d. h. solche Verbindungen, die neben den vorstehend genannten Substituenten auch Aluminium-Sauerstoff-Aluminium-Bindungen enthalten. Bevorzugt werden hier Verbindungen der später genauer beschriebenen Formel $AlR^{13}_{z}Y_{3-z}$.
Als Beispiele für bevorzugte Verbindungen dieser Art seien genannt:

Aluminiumtriäthyl, Aluminiumtri-n-butyl, Aluminiumtri-isobutyl, Aluminiumtri-n-octyl, Aluminium-isoprenyl, Diäthylaluminiumhydrid, Diisobutylaluminiumhydrid, Äthylaluminiumdichlorid, Diäthylaluminiumchlorid, Äthylaluminiumsesquichlorid, Diäthyläthoxyaluminium, Äthyldimethylsiloxyaluminiumdiäthyl, Bis-(di-isopropylaluminium)oxid und deren Gemische.

In der vorstehend beschriebenen Reaktionsstufe B werden Diäthylaluminiumchlorid, Äthylaluminiumsesquichlorid, Aluminiumisoprenyl, Aluminiumtri-n-octyl oder Gemische dieser Verbindungen besonders bevorzugt.

BAD ORIGINAL

Die Reaktionszeit der Reaktionsstufe B kann von wenigen Minuten (z. B. 15 Minuten) bis zu mehreren Stunden (z. B. 2 Stunden) betragen, sie ist nicht kritisch.

Die Reaktionsstufe B kann so durchgeführt werden, daß zunächst die vorzugsweise in Kohlenwasserstoff gelösten Hauptgruppenverbindungen, z. B. solche der vorstehend genannten Aluminiumverbindungen, und der vorzugsweise in Kohlenwasserstoffen suspendierte Primärfeststoff bzw. in Stufe A modifizierte Feststoff zusammengegeben und danach die ebenfalls vorzugsweise in Kohlenwasserstoffen gelösten Nebengruppenverbindungen, z. B. das besonders bevorzugte Titantetrachlorid, zudosiert werden. Auch ein gleichzeitiges Zudosieren der Komponenten ist möglich. Vorzugsweise jedoch legt man die Nebengruppenverbindung, z. B. das bevorzugte Titantetrachlorid, und den Feststoff, beide vorzugsweise in Kohlenwasserstoffen gelöst bzw. suspendiert, vor und dosiert die Hauptgruppenverbindungen, vorzugsweise die Aluminiumorganylverbindungen, zu.

Vorzugsweise wird der Katalysatorfeststoff nach der Modifizierung in den beiden Reaktionsstufen A und B bei 0 bis 100 °C durch wiederholtes Waschen mit Kohlenwasserstoffen, Sedimentieren und Dekantieren weitgehend von löslichen Verbindungen befreit.

Es kann auch vorteilhaft sein, insbesondere wenn die Reaktionsstufe B vor der Reaktionsstufe A durchgeführt wird, wie dies besonders bevorzugt ist, den Katalysatorfeststoff nach der 2. Reaktionsstufe einer Nachbehandlung zu unterwerfen.

Diese Nachbehandlung erfolgt durch Umsetzung einer rührfähigen Suspension des Katalysatorfeststoffes in Kohlenwasserstoffen mit einer oder mehreren, vorzugsweise ebenfalls in Kohlenwasserstoffen gelösten Metallorganylverbindung(en) der II. und/oder III. Hauptgruppe(n) des Periodensystems, wie sie bereits vorstehend definiert sind. Von den bevorzugten aluminiumorganischen Verbindungen werden insbesondere Diäthylaluminiumchlorid, Äthylaluminiumsesquichlorid, Aluminiumisoprenyl, Aluminium-tri-n-octyl und

deren Gemische bevorzugt.

Diese zusätzliche Nachbehandlung des Katalysatorfeststoffes wird vorzugsweise bei Temperaturen von -40 °C bis 150 °C, insbesondere von -20 °C bis 100 °C unter Einsatz von vorzugsweise 0,01 bis 5, insbesondere 0,1 bis 1, Mol der Metallorganylverbindung(en) je Mol im Feststoff gebundenem Magnesiums durchgeführt.

Das eingangs über die Konzentration der Feststoffsuspension gesagte trifft für sämtliche Stufen der Katalysatorbereitung zu. Die Reaktionszeit der Nachbehandlung kann ebenfalls einige Minuten bis mehrere Stunden (z. B. 15 Minuten bis 2 Stunden) betragen.

Eine weitere vorteilhafte Möglichkeit der Nachbehandlung, sei es, daß Reaktionsstufe A vor oder nach Reaktionsstufe B durchgeführt wurde, besteht darin, den Feststoff in Suspension mehrere Stunden* bei Temperaturen von 50 bis 100 °C zu altern und dann erneut auszuwaschen. * (z. B. 2 bis 8 Stunden)

Die Bereitung des Katalysatorfeststoffes und die erfindungsgemäße Durchführung der Polymerisation müssen unter Ausschluß auch geringer Mengen von Sauerstoff und von Wasser oder Wasserdampf durchgeführt werden.

Der in vorstehend beschriebener Weise hergestellte Katalysatorfeststoff, der vorzugsweise durch Waschen bei vorzugsweise 0 bis 100 °C mit Kohlenwasserstoffen, Sedimentieren und Dekantieren, insbesondere von löslichen Metallverbindungen, befreit wurde, eignet sich zur Verwendung bei der erfindungsgemäßen Polymerisation derjenigen alpha-Olefine, die bisher bereits in Gegenwart von Katalysatoren des "Ziegler-Types" bei Drücken von etwa 2 bis 40 bar in der Gasphase oder in Dispersion polymerisiert werden konnten. In einer bevorzugten Ausführungsform des erfindungsgemäßen Verfahrens wird Äthylen im Gemisch mit 0 bis 10 mol-% alpha-Olefinen mit 3 bis 6 Kohlenstoffatomen, z. B. Propen, Buten-1, Isobuten, Penten-1, Hexen-1, eingesetzt und (co)polymerisiert.

Besonders gute Ergebnisse erhält man bereits, wenn man Äthylen homopolymerisiert.

Die erfindungsgemäße, mit vorstehend beschriebenem Katalysatorsystem initiierte Polymerisation kann in der Gasphase oder in Suspension durchgeführt werden. Bei der bevorzugten Polymerisation in Suspension werden die Reaktionsteilnehmer, vorzugsweise in einem Kohlenwasserstoff oder einem Kohlenwasserstoffgemisch dispergiert und bei Drücken von 2 bis 40 bar (absolut), vorzugsweise 2 bis 11 bar und Temperaturen von 60 bis 100 °C polymerisiert. Dabei kann gegebenenfalls durch Zusatz von Wasserstoff die Kettenlänge der entstehenden Polymerisate, oder anders ausgedrückt, der Polymerisationsgrad der Produkte geregelt werden.

Unter Kohlenwasserstoffen werden im Rahmen dieser Anmeldung Verbindungen verstanden, die aus den Elementen Kohlenstoff und Wasserstoff zusammengesetzt sind, bevorzugt werden gesättigte Verbindungen wie geradkettige, verzweigte und cyclische Alkane oder Paraffinkohlenwasserstoffe, die bei den angegebenen Temperaturen und Drücken zum überwiegenden Teil flüssig vorliegen, z. B. Alkane mit 3 bis 20 Kohlenstoffatomen. Beispiele sind Propan, die Butane, die Pentane, die Hexane, die Heptane, die Octane, die Nonane, die Decane, Decalin, Cyclohexan und deren Gemische.

Zur Einleitung der Polymerisation wird der Katalysatorfeststoff durch Zugabe von Metallorganylverbindung(en) der II. und/oder III. Hauptgruppe(n) des Periodensystems zum Polymerisationsgemisch aktiviert.

Von den vorstehend bereits definierten Verbindungen dieser Art werden aluminiumorganische Verbindungen der allgemeinen Formel $AlR^{13}{}_zY_{3-z}$ oder Gemische davon bevorzugt, worin $R^{13}$ gleiche oder verschiedene geradkettige oder verzweigte Alkyl- und/oder Arylreste mit 1 bis 20 Kohlenstoffatomen, Y Wasserstoff und/oder gleiche oder verschiedene Halogenatome, Alkoxy-, Aryloxy- und/

oder Siloxyreste mit jeweils 1 bis 20 Kohlenstoffatomen und z 2 oder 3 bedeuten. Besonders bevorzugt sind Aluminiumtriisobutyl, Aluminiumtri-n-octyl und Aluminiumisoprenyl sowie deren Gemische.

Auch die bereits in der Beschreibung von Reaktionsstufe B beschriebenen oligomeren Aluminiumorganylverbindungen können hier eingesetzt werden.

Die Metallorganylverbindungen der II. und III. Hauptgruppen des Periodensystems werden vorzugsweise gegenüber den im Katalysatorfeststoff gebundenen Nebengruppenelementen der IV. und V. Hauptgruppen im Überschuß verwendet. Es ist natürlich auch möglich, einen Unterschuß oder stöchiometrische Mengen einzusetzen. In einer bevorzugten Ausführungsform werden z. B. 2 bis 100, insbesondere 5 bis 50 mol Aluminiumverbindung(en) je Mol im Katalysatorfeststoff enthaltenen, dort chemisch gebundenen Titans verwendet.

Das erfindungsgemäße Polymerisationsverfahren kann kontinuierlich oder diskontinuierlich durchgeführt werden. Bei der diskontinuierlichen Verfahrensweise werden in der vorstehend beschriebenen Weise hergestellter Katalysatorfeststoff, Aktivator, alpha-Olefin, gegebenenfalls Kohlenwasserstoff und gegebenenfalls Wasserstoff in den Reaktor, vorzugsweise einen Autoklaven vorgelegt und anschließend die Polymerisation durchgeführt. Es können natürlich einzelne oder alle Komponenten ganz oder teilweise nachträglich zudosiert werden.

Bei der kontinuierlichen Verfahrensweise werden die genannten Reaktionskomponenten getrennt oder als Gemisch in der gewünschten Zusammensetzung in den Reaktor kontinuierlich eingespeist. Auch hier ist eine nachträgliche Dosierung von Teilmengen einzelner oder aller Komponenten möglich, bei Verwendung z. B. von Rohrreaktoren auch an verschiedenen Stellen des Reaktors.

BAD ORIGINAL

Durch das erfindungsgemäße Verfahren können Polymerisate hergestellt werden, die keiner weiteren Nachbehandlung unterzogen werden müssen. Dies wird erreicht durch die wegen seiner überraschend hohen Aktivität benötigte geringe Menge des Katalysatorsystems, die keine merkliche Beeinträchtigung des Produktes bewirken kann. Ein weiterer Vorteil des Katalysatorsystems ist die Herstellung von Polymerisaten mit hervorragenden Pulvereigenschaften, breiter Molekulargewichtsverteilung, sehr guten physikalischen Eigenschaften und guter Verarbeitbarkeit. Zum Beispiel können die erfindungsgemäß hergestellten Polymerisate durch Blasextrusion "schmelzbruchfrei", z. B. zu Hohlkörpern oder Folien, verformt werden. Von den sehr guten physikalischen Eigenschaften seien hier nur die hohe Steifigkeit, die hohe Schlagzähigkeit und die gute Spannungsrißbeständigkeit genannt.

Die Erfindung wird im folgenden durch Beispiele und Vergleichsbeispiele weiter erläutert.

Der in den Beispielen genannte Schmelzindex $MFI_5$ wird nach DIN (Deutsche Industrie Norm) 53 735 bei 190 °C und 49,03 N (5 kp) Belastung bestimmt.

Der Fließfaktor $F_{21,6}$ ist der Quotient der Schmelzindizes bei 211,82 N (21,6 kp) und 49,03 N (5 kp) Belastung und kann als Maß für die Molekulargewichtsverteilung gelten.

Der in der erfindungsgemäßen Polymerisation verwendbare Katalysaotr kann z. B. in folgender Weise hergestellt werden:

a) <u>Herstellung des Primärfeststoffes</u>

900 ml einer Hexan-Heptan-Lösung, die 0,5 mol n-Butyl-sec-Butylmagnesium enthielten, wurden innerhalb von 2 Stunden bei 60 °C zu 1 mol Chloroform in 420 ml Isooctan dosiert. Es bildete sich ein brauner Feststoff. Man rührte noch ca. eine halbe Stunde bei 60 °C und wusch anschließend den Feststoff bei 50 bis 60 °C 3 mal mit jeweils 3 Liter Isooctan durch wiederholtes Sedimentieren und Dekantieren. Anschließend wurde auf 1 Liter aufgefüllt.

b) Herstellung des Katalysatorfeststoffes

b1) 100 ml der nach a) hergestellten Primärfeststoffsuspension, die 50 mmol Magnesium enthielten, wurden vorgelegt und bei Raumtemperatur unter Rühren mit 15 mmol Aluminiumtri-isopropylat versetzt. Nach dem Aufheizen auf 50 °C wurde eine Stunde gerührt. Anschließend erfolgte die Zugabe von 100 mmol $TiCl_4$. Dann wurde die Suspension auf 80 °C erwärmt und eine weitere Stunde gerührt. Nach dem Abkühlen auf 50 °C wurde der Feststoff so lange unter wiederholtem Sedimentieren und Dekantieren mit Isooctan gewaschen, bis in der dekantierten Flüssigkeit praktisch kein Titan mehr nachweisbar war.

Der Feststoff enthielt 18,7 mmol gebundenes Titan.

Nach Aufnehmen in 100 ml Isooctan wurden bei Raumtemperatur unter Rühren 15 mmol $TiCl_4$ und anschließend 30 mmol Äthylaluminiumsesquichlorid, gelöst in 15 ml Isooctan zugegeben. Nach dem Aufwärmen auf 50 °C wurde eine Stunde gerührt und anschließend so lange gewaschen, bis in dekantierten Isooctan praktisch kein Aluminium und kein Chlorid mehr nachweisbar waren.

Der Feststoff enthielt insgesamt 34 mmol gebundenes Titan.

b2) Die Herstellung erfolgte wie unter b1), nur wurde der Katalysatorfeststoff nach dem 2. Auswaschen zur Nachbehandlung in 300 ml Isooctan suspendiert und 3 Stunden bei 90 °C gealtert. Nach wiederholtem Auswaschen bei 50 °C mit Isooctan enthält der Katalysatorfeststoff insgesamt 31 mmol gebundenes Titan.

b3) Die Herstellung des Katalysators erfolgte wie unter b1), nur wurden in der 2. Stufe (Reaktionsstufe B) 15 mmol Äthylaluminiumsesquichlorid statt 30 mmol eingesetzt.

Der Katalysatorfeststoff enthielt insgesamt 33,2 mmol gebundenes Titan.

b4) Die Herstellung erfolgte wie unter b3), nur wurde der Katalysatorfeststoff analog b2) nachbehandelt. Der Katalysatorfeststoff enthielt insgesamt 30,4 mmol gebundenes Titan.

b5) 100 ml der nach a) hergestellten Primärfeststoffsuspension, die 50 mmol Magnesium enthielten, wurden vorgelegt und bei Raumtemperatur unter Rühren mit 15 mmol Borsäure-tri-isopropylester versetzt. Nach dem Aufheizen auf 50 °C wurde 1 Stunde gerührt. Anschließend erfolgte die Zugabe von 33 mmol $TiCl_4$. Dann wurde die Suspension auf 90 °C erwärmt und weitere 3 Stunden gerührt. Nach dem Abkühlen auf 50 °C wurde der Feststoff analog b1) bei 50 °C gewaschen.

Der Feststoff enthielt 17,5 mmol gebundenes Titan.

Nach Aufnehmen in 130 ml Isooctan wurden bei Raumtemperatur unter Rühren 15 mmol $TiCl_4$ und anschließend 30 mmol Äthylaluminiumsesquichlorid, gelöst in 15 ml Isooctan, zugegeben. Dann wurde die Suspension 1 Stunde bei 50 °C gerührt und analog b1) gewaschen.

Der Katalysatorfeststoff enthielt insgesamt 31,3 mmol gebundenes Titan.

b6) 100 ml der nach a) hergestellten Primärfeststoffsuspension, die 50 mmol Magnesium enthielten, wurden vorgelegt und bei Raumtemperatur unter Rühren mit 11 mmol Borsäure-tri-tert.-butylester versetzt. Nach dem Aufheizen auf 50 °C

wurde 1 Stunde gerührt. Anschließend erfolgte die Zugabe von 100 mmol $TiCl_4$. Dann wurde die Suspension auf 90 °C erwärmt und 1/2 Stunde gerührt.

Nach dem Abkühlen auf 50 °C wurde der Feststoff analog b1) gewaschen.

Der Feststoff enthielt 12 mmol gebundenes Titan.

Nach Aufnehmen in 100 ml Isooctan wurden bei Raumtemperatur unter Rühren 15 mmol $TiCl_4$ und anschließend 15 mmol Äthylaluminiumsesquichlorid, gelöst in 7,5 ml Isooctan, zugegeben. Dann wurde die Suspension eine Stunde bei 50 °C gerührt und analog b1) gewaschen.

Der Katalysatorfeststoff enthielt insbesamt 28,9 mmol gebundenes Titan.

b7) 100 ml der nach a) hergestellten Primärfeststoffsuspension, die 50 mmol Magnesium enthielten, wurden vorgelegt und bei Raumtemperatur unter Rühren mit 15 mmol $TiCl_4$ und 30 mmol Äthylaluminiumsesquichlorid, gelöst in 15 ml Isooctan, versetzt. Nach dem Aufheizen auf 50 °C wurde 1,5 Stunden gerührt und bei dieser Temperatur so lange unter wiederholtem Sedimentieren und Dekantieren mit Isooctan gewaschen, bis in der dekantierten Flüssigkeit praktisch kein Aluminium und kein Chlorid mehr aufweisbar waren.

Der Feststoff enthielt 14,6 mmol gebundenes Titan.

Nach Aufnehmen in 100 ml Isooctan wurden bei Raumtemperatur unter Rühren 15 mmol Aluminium-tri-iso-propylat zugegeben. Die Suspension wurde dann 1 Stunde bei 50 °C gerührt. Nach Zugabe von 30 mmol $TiCl_4$ wurde auf 90 °C erwärmt und noch eine halbe Stunde gerührt. Nach dem Abkühlen auf 50 °C erfolgte ein erneuter Waschvorgang, bis im dekantierten Isooctan praktisch kein gelöstes Titan

mehr nachweisbar war.

Der Feststoff wurde zur Nachbehandlung erneut in 300 ml Isooctan suspendiert und 3 Stunden bei 90 °C gealtert. Nach wiederholtem Auswaschen bei 50 °C mit Isooctan enthielt der Katalysatorfeststoff insgesamt 28,8 mmol gebundenes Titan.

b8) Die Herstellung des Katalysatorfeststoffes erfolgte wie unter b7), nur wurde der Feststoff zur Nachbehandlung in 100 ml Isooctan suspendiert, mit 2 ml Äthylaluminiumsesquichlorid versetzt, eine Stunde bei 50 °C gerührt und bei dieser Temperatur erneut ausgewaschen.

Der Katalysatorfeststoff enthielt insgesamt 27,9 mmol gebundenes Titan.

b9) Die Herstellung des Katalysatorfeststoffes erfolgte wie unter b7), nur wurde der Feststoff zur Nachbehandlung in 100 ml Isooctan suspendiert, mit 1,6 ml Aluminiumisoprenyl versetzt, 1 Stunde bei 50 °C gerührt und bei dieser Temperatur erneut ausgewaschen. Der Katalysatorfeststoff enthielt insgesamt 27,5 mmol gebundenes Titan.

b10) 100 ml der nach a) hergestellten Primärfeststoffsuspension, die 50 mmol Magnesium enthielten, wurden vorgelegt und bei Raumtemperatur unter Rühren mit 15 mmol Titantetrachlorid und 30 mmol Äthylaluminiumsesquichlorid, gelöst in 15 ml Isooctan, versetzt. Nach dem Aufheizen auf 50 °C wurde 1,5 Stunden gerührt und bei dieser Temperatur so lange unter wiederholtem Sedimentieren und Dekantieren mit Isooctan gewaschen, bis in der dekantierten Flüssigkeit praktisch kein Aluminium und kein Chlorid mehr nachweisbar waren.

Der Feststoff enthielt 14,3 mmol gebundenes Titan.

Nach Aufnehmen in 100 ml Isooctan wurden bei Raumtemperatur unter Rühren innerhalb einer viertel Stunde gleichzeitig 15 mmol Aluminiumtriäthyl, gelöst in 20 ml Isooctan und 45 mmol Isopropanol, gelöst in 20 ml Isooctan, in die Suspension dosiert. Nach einstündigem Rühren bei 50 °C erfolgte die Zugabe von 30 mmol Titantetrachlorid. Die Suspension wurde dann auf 90 °C erwärmt und eine halbe Stunde gerührt. Die Weiterbehandlung erfolgte wie unter b7).
Der Feststoff enthielt insgesamt 27,6 mmol gebundenes Titan.

b11) Die Herstellung erfolgte wie unter b10), nur wurde der Feststoff zur Nachbehandlung in 100 ml Isooctan suspendiert, mit 1 ml Äthylaluminiumsesquichlorid versetzt, 1 Stunde bei 50 °C gerührt und bei dieser Temperatur erneut ausgewaschen.

Der Feststoff enthielt insgesamt 27,2 mmol gebundenes Titan.

b12) 100 ml der nach a) hergestellten Primärfeststoffsuspension, die 50 mmol Magnesium enthielten, wurden vorgelegt und bei Raumtemperatur unter Rühren mit 15 mmol Titantetrachlorid und 30 mmol Äthylaluminiumsesquichlorid, gelöst in 15 ml Isooctan, versetzt. Nach dem Aufheizen auf 50 °C wurde 1,5 Stunden gerührt und anschließend bei dieser Temperatur so lange unter wiederholtem Sedimentieren und Dekantieren mit Isooctan gewaschen, bis in der dekantierten Flüssigkeit praktisch kein Aluminium und kein Chlorid mehr nachweisbar waren.

Der Feststoff enthielt 14,6 mmol gebundenes Titan.

Nach Aufnehmen in 100 ml Isooctan wurden bei Raumtemperatur unter Rühren innerhalb 15 Minuten gleichzeitig 15 mmol Aluminiumtriäthyl, gelöst in 20 ml Isooctan und ein

Gemisch aus 30 mmol Isopropanol und 15 mmol tert.-Butanol, gelöst in 20 ml Isooctan, in die Suspension dosiert. Nach einstündigem Rühren bei 50 °C erfolgte die Zugabe von 30 mmol $TiCl_4$. Die Suspension wurde dann auf 90 °C erwärmt und eine halbe Stunde gerührt.

Die Weiterbehandlung erfolgte wie unter b7).

Der Feststoff enthielt insgesamt 29 mmol gebundenes Titan.

b13) Die Herstellung erfolgte wie unter b12), nur wurde der Feststoff wie unter b11) nachbehandelt.

Der Katalysatorfeststoff enthielt insgesamt 28 mmol gebundenes Titan.

b14) 100 ml der nach a) hergestellten Primärfeststoffsuspension, die 50 mmol Magnesium enthielten, wurden vorgelegt und bei Raumtemperatur unter Rühren mit 15 mmol $TiCl_4$ und 30 mmol Äthylaluminiumsesquichlorid, gelöst in 15 ml Isooctan, versetzt. Nach dem Aufheizen auf 50 °C wurde 90 Minuten gerührt und bei dieser Temperatur so lange unter wiederholtem Sedimentieren und Dekantieren mit Isooctan gewaschen, bis in der dekantierten Flüssigkeit praktisch kein Aluminium und kein Chlorid mehr nachweisbar waren.

Der Feststoff enthielt 14,4 mmol gebundenes Titan.

Nach Aufnehmen in 100 ml Isooctan wurden bei Raumtemperatur unter Rühren 15 mmol Borsäure-tri-isopropylester zugegeben. Die Suspension wurde dann 1 Stunde bei 50 °C gerührt. Nach Zugabe von 30 mmol $TiCl_4$ wurde auf 95 °C erwärmt und noch eine weitere Stunde gerührt. Nach dem Abkühlen auf 50 °C erfolgt dann ein erneuter Waschvorgang, bis im dekantierten Isooctan praktisch kein gelöstes Ti-

BAD ORIGINAL

tan mehr nachweisbar war.

Der Feststoff wurde zur Nabhbehandlung erneut in 300 ml Isooctan suspendiert und 3 Stunden bei 90 °C gealtert. Nach wiederhotem Auswaschen bei 50 °C mit Isooctan enthielt der Katalysatorfeststoff ingesamt 25 mmol gebundenes Titan.

b15) Die Herstellung des Katalysatorfeststoffes erfolgte wie unter b14), nur wurde der Feststoff anstelle des Alterungsschrittes zur Nachbehandlung in 100 ml Isooctan suspendiert, mit 2 ml Äthylaluminiumsesquichlorid versetzt, 1 Stunde bei 50 °C gerührt und bei dieser Temperatur erneut ausgewaschen.

Der Katalysatorfeststoff enthielt insgesamt 22,5 mmol gebundenes Titan.

b16) 100 ml der nach a) hergestellten Primärfeststoffsuspension, die 50 mmol Magnesium enthielten, wurden vorgelegt und bei Raumtemperatur unter Rühren mit 15 mmol $TiCl_4$ und 30 mmol Äthylaluminiumsesquichlorid, gelöst in 15 ml Isooctan, versetzt. Nach dem Aufheizen auf 50 °C wurde 1,5 Stunden gerührt und bei dieser Temperatur so lange unter wiederholtem Sedimentieren und Dekantieren mit Isooctan gewaschen, bis in der dekantierten Flüssigkeit praktisch kein Aluminium und kein Chlorid mehr nachweisbar waren.

Auf dem Feststoff waren 14,7 mmol Titan fixiert.

Nach Aufnehmen in 100 ml Isooctan wurden bei Raumtemperatur unter Rühren 7,5 mmol Tri-tert.-butylphosphat zugegeben. Die Suspension wurde dann 1 Stunde bei 50 °C gerührt. Nach Zugabe von 30 mmol $TiCl_4$ wurde auf 90 °C erwärmt und noch 1/2 Stunde gerührt. Nach dem Abkühlen auf 50 °C erfolgte ein erneuter Waschvorgang, bis im dekantierten

Isooctan praktisch kein gelöstes Titan mehr nachweisbar war.

Zur Nachbehandlung wurde der Feststoff erneut in 300 ml Isooctan suspendiert und 3 Stunden unter Rühren bei 90 °C gealtert. Nach wiederholtem Auswaschen bei 50 °C mit Isooctan enthielt der Katalysatorfeststoff insgesamt 19,6 mmol gebundenes Titan.

b17) Die Katalysatorbereitung erfolgte wie unter b)16, nur wurden 15 mmol statt 7,5 mmol Tri-tert.-butylphosphat eingesetzt.

Zur Nachbehandlung wurde der Feststoff in 300 ml Isooctan suspendiert, mit 2 ml Äthylaluminiumsesquichlorid versetzt, 1 Stunde bei 50 °C gerührt und bei dieser Temperatur erneut ausgewaschen.

Der Katalysatorfeststoff enthielt 24 mmol gebundenes Titan.

b18) 100 ml der nach a) hergestellten Primärfeststoffsuspension, die 50 mmol Magnesium enthielten, wurden vorgelegt und bei Raumtemperatur unter Rühren mit 15 mmol $TiCl_4$ und 30 mmol Äthylaluminiumsesquichlorid, gelöst in 15 ml Isooctan, versetzt. Nach dem Aufheizen auf 50 °C wurde 1,5 Stunden gerührt und bei dieser Temperatur so lange unter wiederholtem Sedimentieren und Dekantieren mit Isooctan gewaschen, bis in der dekantierten Flüssigkeit praktisch kein Aluminium und kein Chlorid mehr nachweisbar waren.

Auf dem Feststoff waren 14,4 mmol Titan fixiert.

Nach Aufnehmen in 100 ml Isooctan wurden bei Raumtemperatur unter Rühren 15 mmol Tri-tert.-butylvanadat zugegeben. Die Suspension wurde dann 1 Stunde bei 50 °C gerührt. Nach Zugabe von 30 mmol $TiCl_4$ wurde auf 90 °C erwärmt und noch 1/2 Stunde gerührt. Nach dem Abkühlen auf 50 °C erfolgte ein erneuter Waschvorgang, bis im dekantierten Isooctan praktisch kein gelöstes Titan mehr nachweisbar war.

Der Katalysatorfeststoff enthielt insgesamt 30,6 mmol gebundenes Titan und 14,8 mmol gebundenes Vanadin.

b19) Die Katalysatorbereitung erfolgte wie unter b16), nur wurden anstelle von 15 mmol Tri-tert.-butylvanadat 15 mmol Tri-isopropylvanadat eingesetzt. Die Suspension wurde dann 1 Stunde bei 50 °C gerührt. Nach Zugabe von 30 mmol $TiCl_4$ wurde auf 90 °C erwärmt und 3 Stunden gerührt.

Nach dem Auswaschen enthielt der Katalysatorfeststoff 32 mmol gebundenes Titan und 15 mmol gebundenes Vanadin.

b20) 100 ml der nach a) hergestellten Primärfeststoffsuspension, die 50 mmol Magnesium enthielten, wurden vorgelegt und bei Raumtemperatur unter Rühren mit 7,5 mmol Tri-isopropylvanadat versetzt. Nach dem Aufheizen auf 50 °C wurde 1 Stunde gerührt. Anschließend erfolgte die Zugabe von 30 mmol $TiCl_4$. Dann wurde die Suspension auf 90 °C erwärmt und weitere 3 Stunden gerührt. Nach dem Abkühlen auf 50 °C wurde der Feststoff so lange unter wiederholtem Sedimentieren und Dekantieren mit Isooctan gewaschen, bis in der dekantierten Flüssigkeit praktisch kein Titan mehr nachweisbar war.

Auf dem Feststoff waren 17,5 mmol Titan und 7,4 mmol Vanadin fixiert.

Nach Aufnehmen in 100 ml Isooctan bei Raumtemperatur unter Rühren 15 mmol $TiCl_4$ und anschließend 30 mmol Äthylaluminiumsesquichlorid, gelöst in 15 ml Isooctan zugegeben. Nach dem Erwärmen auf 50 °C wurde 1 Stunde gerührt und anschließend so lange gewaschen, bis im dekantierten Isooctan praktisch kein Aluminium und kein Chlorid mehr nachweisbar waren.

Der Katalysatorfeststoff enthielt insgesamt 32 mmol gebundenes Titan und 6,8 mmol gebundenes Vanadin.

b21) 100 ml der nach a) hergestellten Primärfeststoffsuspension, die 50 mmol Magnesium enthielten, wurden vorgelegt und bei Raumtemperatur unter Rühren mit 15 mmol Di-isopropylsulfit versetzt. Nach dem Aufheizen auf 50 °C wurde 1 Stunde gerührt. Anschließend erfolgte die Zugabe von 100 mmol $TiCl_4$. Dann wurde die Suspension auf 90 °C erwärmt und weitere 1,5 Stunden gerührt. Nach dem Abkühlen auf 50 °C wurde der Feststoff so lange unter wiederholtem Sedimentieren und Dekantieren mit Isooctan gewaschen, bis in der dekantierten Flüssigkeit praktisch kein Titan mehr nachweisbar war.

Auf dem Feststoff waren 9,5 mmol Titan fixiert.

Nach Aufnehmen in 100 ml Isooctan wurden bei Raumtemperatur unter Rühren 15 mmol $TiCl_4$ und anschließend 30 mmol Äthylaluminiumsesquichlorid, gelöst in 15 ml Isooctan zugegeben. Nach dem Erwärmen auf 50 °C wurde 1 Stunde gerührt und anschließend so lange gewaschen, bis im dekantierten Isooctan praktisch kein Aluminium und kein Chlorid mehr nachweisbar waren.

Der Katalysatorfeststoff enthielt insgesamt 24,8 mmol gebundenes Titan.

b22) 100 ml der nach a) hergestellten Primärfeststoffsuspension, die 50 mmol Magnesium enthielten, wurden vorgelegt und bei Raumtemperatur unter Rühren mit 15 mmol $TiCl_4$

und 30 mmol Äthylaluminiumsesquichlorid, gelöst in 15 ml Isooctan, versetzt. Nach dem Aufheizen auf 50 °C wurde 1 Stunde gerührt und bei dieser Temperatur so lange unter wiederholtem Sedimentieren und Dekantieren mit Isooctan gewaschen, bis in der dekantierten Flüssigkeit praktisch kein Aluminium und kein Chlorid mehr nachweisbar waren.

Auf dem Feststoff waren 14,4 mmol Titan fixiert.

Nach Aufnehmen in 150 ml Isooctan wurden bei Raumtemperatur unter Rühren 7,5 mmol $ZnEt_2$ und anschließend 15 mmol t.Butanol, gelöst in 10 ml Isooctan, zugegeben. Die Suspension wurde dann 1 Stunde bei 50 °C gerührt. Nach Zugabe von 100 mmol $TiCl_4$ wurde auf 90 °C erwärmt und noch 1/2 Stunde gerührt. Nach dem Abkühlen auf 50 °C erfolgte ein erneuter Waschvorgang, bis im dekantierten Isooctan praktisch kein gelöstes Titan mehr nachweisbar war.

Zur Nachbehandlung wurde der Feststoff erneut in 300 ml Isooctan suspendiert und 3 Stunden unter Rühren bei 90 °C gealtert. Nach wiederholtem Auswaschen bei 50 °C mit Isooctan enthielt der Katalysatorfeststoff insgesamt 27 mmol gebundenes Titan.

b23) Die Katalysatorbereitung erfolgte wie unter b22), nur wurden in der 2. Stufe 30 mmol statt 100 mmol $TiCl_4$ eingesetzt.

Der Katalysatorfeststoff enthielt insgesamt 22 mmol gebundenes Titan.

b24) Die Katalysatorbereitung erfolgte wie unter b22), nur wurden in der 2. Stufe 15 mmol $ZnEt_2$ statt 7,5 mmol, so wie 30 mmol statt 15 mmol t-Butanol eingesetzt. Der

Katalysatorfeststoff enthielt insgesamt 28,8 mmol gebundenes Titan.

b25) Die Katalysatorbereitung erfolgte wie unter b22), nur wurden in der 2. Stufe 15 mmol Isopropanol statt t.Butanol zugegeben. Die Umsetzung mit $TiCl_4$ wurde 2 Stunden bei 90 °C durchgeführt.

Der Katalysatorfeststoff enthielt insgesamt 27,3 mmol gebundenes Titan.

b26) 100 ml der nach a) hergestellten Primärfeststoffsuspension, die 50 mmol Magnesium enthielten, wurden vorgelegt und bei Raumtemperatur unter Rühren mit 15 mmol t.Butanol, gelöst in 10 ml Isooctan, versetzt. Die Suspension wurde 1/4 Stunde gerührt, mit 7,5 mmol $ZnEt_2$, gelöst in 10 ml Isooctan, versetzt und 1 Stunde bei 50 °C gerührt.

Anschließend erfolgte die Zugabe von 100 mmol $TiCl_4$. Dann wurde die Suspension auf 80 °C erwärmt und eine weitere Stunde bei dieser Temperatur gerührt. Nach dem Abkühlen auf 50 °C wurde der Feststoff so lange unter wiederholtem Sedimentieren und Dekantieren mit Isooctan gewaschen, bis in der dekantierten Flüssigkeit praktisch kein Titan mehr nachweisbar war.

Auf dem Feststoff waren 13,1 mmol Titan fixiert.

Nach Aufnehmen in 150 ml Isooctan wurden bei Raumtemperatur unter Rühren 15 mmol $TiCl_4$ und anschließend 30 mmol Äthylaluminiumsesquichlorid, gelöst in 15 ml Isooctan zugegeben. Nach dem Erwärmen auf 50 °C wurde 1 Stunde gerührt und anschließend so lange gewaschen, bis im dekantierten Isooctan praktisch kein Aluminium und kein Chlorid mehr nachweisbar waren.

Der Katalysatorfeststoff enthielt insgesamt 26,2 mmol gebundenes Titan.

b27) 100 ml der nach a) hergestellten Primärfeststoffsuspension, die 50 mmol Magnesium enthielten, wurden vorgelegt und bei Raumtemperatur unter Rühren mit 15 mmol $TiCl_4$ und 30 mmol Äthylaluminiumsesquichlorid, gelöst in 15 ml Isooctan, versetzt. Nach dem Aufheizen auf 50 °C wurde 1,5 Stunden gerührt und bei dieser Temperatur so lange unter wiederholtem Sedimentieren und Dekantieren mit Isooctan gewaschen, bis in der dekantierten Flüssigkeit praktisch kein Aluminium und kein Chlorid mehr nachweisbar waren.

Auf dem Feststoff waren 14,7 mmol Titan fixiert.

Nach Aufnehmen in 100 ml Isooctan wurden bei Raumtemperatur unter Rühren 20 mmol Kalium-t.butylat zugegeben. Die Suspension wurde dann 1 Stunde bei 50 °C gerührt. Nach Zugabe von 40 mmol $TiCl_4$ wurde auf 90 °C erwärmt und noch 1/2 Stunde gerührt. Nach dem Abkühlen auf 50 °C erfolgte ein erneuter Waschvorgang, bis im dekantierten Isooctan praktisch kein gelöstes Titan mehr nachweisbar war.

Der Katalysatorfeststoff enthielt insgesamt 28,2 mmol gebundenes Titan.

b28) Die Katalysatorbereitung erfolgte wie unter b27), nur wurde Kalium-t.butylat durch Natrium-isopropylat ersetzt.

Der Katalysatorfeststoff enthielt insgesamt 24 mmol gebundenes Titan.

b29) 100 ml der nach a) hergestellten Primärfeststoffsuspension, die 50 mmol Magnesium enthielten, wurden vorgelegt und bei Raumtemperatur unter Rühren mit 15 mmol $TiCl_4$ und 30 mmol Äthylaluminiumsesquichlorid, gelöst in 15 ml Isooctan, versetzt. Nach dem Aufheizen auf 50 °C wurde 1,5 Stunden gerührt und bei dieser Temperatur so lange unter wiederholtem Sedimentieren und Dekantieren mit Isooctan gewaschen, bis in der dekantierten Flüssigkeit praktisch kein Aluminium und kein Chlorid mehr nachweisbar waren.

Auf dem Feststoff waren 14,7 mmol Titan fixiert.

Nach Aufnehmen in 100 ml Isooctan wurden bei Raumtemperatur unter Rühren 15 mmol Tetra-isopropoxisilan zugegeben. Die Suspension wurde dann 1 Stunde bei 50 °C gerührt. Nach Zugabe von 40 mmol $TiCl_4$ wurde auf 95 °C erwärmt und noch 1 Stunde gerührt. Nach dem Abkühlen auf 50 °C erfolgte ein erneuter Waschvorgang, bis im dekantierten Isooctan praktisch kein gelöstes Titan mehr nachweisbar war.

Der Katalysatorfeststoff enthielt insgesamt 38 mmol gebundenes Titan.

b30) Die Katalysatorbereitung erfolgte wie unter b29), nur wurde der Feststoff zur Nachbehandlung erneut in 300 ml Isooctan suspendiert und 3 Stunden unter Rühren bei 90 °C gealtert. Nach wiederholtem Auswaschen bei 50 °C mit Isooctan enthielt der Katalysatorfeststoff insgesamt 36 mmol gebundenes Titan.

b31) 100 ml der nach a) hergestellten Primärfeststoffsuspension, die 50 mmol Magnesium enthielten, wurden vorgelegt und bei Raumtemperatur unter Rühren mit 15 mmol Tetraisopropoxi-silan versetzt. Nach dem Aufheizen auf 50 °C

wurde 1 Stunde gerührt. Anschließend erfolgte die Zugabe von 50 mmol $TiCl_4$. Dann wurde die Suspension auf 90 °C erwärmt und weitere 6 Stunden gerührt. Nach dem Abkühlen auf 50 °C wurde der Feststoff so lange unter wiederholtem Sedimentieren und Dekantieren mit Isooctan gewaschen, bis in der dekantierten Flüssigkeit praktisch kein Titan mehr nachweisbar war.

Auf dem Feststoff waren 12,8 mmol Titan fixiert.

Nach Aufnehmen in 100 ml Isooctan wurden bei Raumtemperatur unter Rühren 15 mmol $TiCl_4$ und anschließend 30 mmol Äthylaluminiumsesquichlorid, gelöst in 15 ml Isooctan zugegeben. Nach dem Erwärmen auf 50 °C wurde eine Stunde gerührt und anschließend so lange gewaschen, bis im dekantierten Isooctan praktisch kein Aluminium und kein Chlorid mehr nachweisbar waren.

Der Katalysatorfeststoff enthielt insgesamt 27,5 mmol gebundenes Titan.

b32) Die Katalysatorbereitung erfolgte wie unter b31), nur wurde der Feststoff analog b30) nachbehandelt. Der Katalysatorfeststoff enthielt insgesamt 26 mmol gebundenes Titan.

b33) Die 1. Stufe der Katalysatorbereitung erfolgte wie unter b29).

Nach Aufnehmen in 100 ml Isooctan wurden bei Raumtemperatur unter Rühren 10 mmol Tri-t.butoxi-chlorsilan zugegeben. Die Suspension wurde dann 1 Stunde bei 50 °C gerührt. Nach Zugabe von 50 mmol $TiCl_4$ wurde auf 90 °C erwärmt und noch 1/2 Stunde gerührt. Nach dem Abkühlen auf 50 °C wurde der Feststoff analog b29) gewaschen und wie b30) nachbehandelt.

Der Katalysatorfeststoff enthielt insgesamt 19,4 mmol gebundenes Titan.

b34) Die 1. Stufe der Katalysatorbereitung erfolgte wie unter b29).

Nach Aufnehmen in 100 ml Isooctan wurden bei Raumtemperatur unter Rühren 15 mmol Tri-t.butoxisilan zugegeben. Die Suspension wurde dann 1 Stunde bei 50 °C gerührt. Nach Zugabe von 30 mmol $TiCl_4$ wurde auf 90 °C erwärmt und noch 1/2 Stunde gerührt. Nach dem Abkühlen auf 50 °C wurde der Feststoff analog b29) gewaschen und wie b30) nachbehandelt. Der Katalysatorfeststoff enthielt insgesamt 24,6 mmol gebundenes Titan.

b35) Die 1. Stufe der Katalysatorbereitung erfolgte wie unter b29).

Nach Aufnehmen in 100 ml Isooctan wurden bei Raumtemperatur unter Rühren 5 mmol Tetra-i.butoxititanat zugegeben. Die Suspension wurde dann 1 Stunde bei 50 °C gerührt. Nach Zugabe von 20 mmol $TiCl_4$ wurde auf 90 °C erwärmt und noch 1/2 Stunde gerührt.

Das Waschen des Feststoffes erfolgte analog b29), das Nachbehandeln wie unter b30).

Der Katalysatorfeststoff enthielt insgesamt 27 mmol gebundenes Titan.

b36) Die Katalysatorbereitung erfolgte wie unter b35), nur wurde der Katalysatorfeststoff zur Nachbehandlung (anstelle der Alterung) in 300 ml Isooctan suspendiert, mit 2 ml Äthylaluminiumsesquichlorid versetzt, 1 Stunde bei 50 °C gerührt und bei dieser Temperatur erneut ausgewaschen. Der Katalysatorfeststoff enthielt insgesamt

28,2 mmol gebundenes Titan.

b37) 100 ml der nach a) hergestellten Primärfeststoffsuspension, die 50 mmol Magnesium enthielten, wurden vorgelegt und bei Raumtemperatur unter Rühren mit 5 mmol Tetra-t.butoxititanat versetzt. Nach dem Aufheizen auf 50 °C wurde 1 Stunde gerührt. Anschließend erfolgte die Zugabe von 20 mmol $TiCl_4$. Dann wurde die Suspension auf 90 °C erwärmt und weitere 3 Stunden gerührt. Nach dem Abkühlen auf 50 °C erfolgte das Auswaschen wie unter b31) beschrieben.

Auf dem Feststoff waren 15,5 mmol Titan fixiert.

Die Bereitung der 2. Stufe erfolgte analog b31). Der Katalysatorfeststoff enthielt insgesamt 30,4 mmol gebundenes Titan.

BAD ORIGINAL

c) Herstellung nicht erfindungsgemäßer Katalysatorfeststoffe

c1) 100 ml der nach a) hergestellten Primärfeststoffsuspension, die 50 mmol Magnesium enthielten, wurden mit 14 mmol Titantetrachlorid versetzt und auf 30 °C erwärmt. Danach wurden in einer halben Stunde unter Rühren 14 mmol Äthylaluminiumsesquichlorid, gelöst in 10 ml Isooctan, der Suspension zugesetzt, die anschließend weitere 4 Stunden bei 30 °C gerührt wurde. Nach Erwärmen auf 50 °C wurde der Feststoff entsprechend b1) gewaschen. Er enthielt anschließend 13,8 mmol gebundenes Titan.

c2) 100 ml der Primärfeststoffsuspension, die 50 mmol Magnesium enthielten, wurden bei Raumtemperatur unter Rühren mit 15 mmol Aluminium-tri-isopropylat versetzt, auf 50 °C erwärmt und 1 Stunde bei 50 °C gerührt. Nach Zusetzen von 100 mmol $TiCl_4$ und Erwärmen auf 80 °C wurde 1 Stunde gerührt und analog b1) aufgearbeitet. Der Feststoff enthielt 16,2 mmol gebundendes Titan.

c3) 100 ml der Primärfeststoffsuspension, die 50 mmol Magnesium enthielten, wurden bei Raumtemperatur unter Rühren mit 15 mmol Borsäure-tri-isopropylester versetzt, auf 50 °C erwärmt und 1 Stunde bei 50 °C gerührt. Nach Zusetzen von 50 mmol $TiCl_4$ und Erwärmen auf 80 °C wurde 1 Stunde gerührt und analog b1) aufgearbeitet. Der Feststoff enthielt 10,3 mmol gebundenes Titan.

c4) 100 ml der nach a) hergestellten Primärfeststoffsuspension, die 50 mmol Magnesium enthielten, wurden vorgelegt und bei Raumtemperatur unter Rühren mit 15 mmol Borsäure-tri-n-butylester versetzt. Nach dem Aufheizen auf 50 °C wurde 1 Stunde gerührt. Anschließend erfolgte die Zugabe von 100 mmol $TiCl_4$. Dann wurde die Suspension auf 90 °C erwärmt und 3 Stunden gerührt.

Nach dem Abkühlen auf 50 °C wurde der Feststoff analog b1) bei 50 °C gewaschen.

Der Feststoff enthielt 2,3 mmol gebundenes Titan.

Nach Aufnehmen in 100 ml Isooctan wurden bei Raumtemperatur unter Rühren 15 mmol $TiCl_4$ und anschließend 15 mmol Äthylaluminiumsesquichlorid, gelöst in 7,5 ml Isooctan , zugegeben. Dann wurde die Suspension 1 Stunde bei 50 °C gerührt und analog b1) gewaschen.

Der Katalysatorfeststoff enthielt insgesamt 16,1 mmol gebundenes Titan.

c5) 100 ml der nach a) hergestellten Primärfeststoffsuspension, die 50 mmol Magnesium enthielten, wurden vorgelegt und bei Raumtemperatur unter Rühren mit 15 mmol Titantetrachlorid und 30 mmol Äthylaluminiumsesquichlorid, gelöst in 15 ml Isooctan, versetzt. Nach dem Aufheizen auf 50 °C wurde 90 Minuten gerührt und bei dieser Temperatur so lange unter wiederholtem Sedimentieren und Dekantieren mit Isooctan gewaschen, bis in der dekantierten Flüssigkeit praktisch kein Aluminium und kein Chlorid mehr nachweisbar waren.

Der Feststoff enthielt 14,2 mmol gebundenes Titan.

Nach Aufnehmen in 100 ml Isooctan wurden bei Raumtemperatur unter Rühren 15 mmol Aluminium-tri-n-propylat zugegeben. Die Suspension wurde dann 1 Stunde bei 50 °C gerührt. Nach Zugabe von 30 mmol $TiCl_4$ wurde auf 90 °C erwärmt und eine weitere halbe Stunde gerührt. Nach dem Abkühlen auf 50 °C erfolgte ein erneuter Waschvorgang, bis im dekantierten Isooctan praktisch kein gelöstes Titan mehr nachweisbar war.

BAD ORIGINAL

Der Feststoff wurde zur Nachbehandlung erneut in 300 ml Isooctan suspendiert und 3 Stunden bei 90°C gealtert. Nach wiederholtem Auswaschen bei 50 °C mit Isooctan enthielt der Katalysatorfeststoff ingesamt 15,3 mmol gebundenes Titan.

c6) 100 ml der nach a) hergestellten Primärfeststoffsuspension, die 50 mmol Magnesium enthielten, wurden vorgelegt und bei Raumtemperatur unter Rühren mit 15 mmol $TiCl_4$ und 30 mmol Äthylaluminiumsesquichlorid, gelöst in 15 ml Isooctan, versetzt. Nach dem Aufheizen auf 50 °C wurde 1,5 Stunden gerührt und bei dieser Temperatur so lange unter wiederholtem Sedimentieren und Dekantieren mit Isooctan gewaschen, bis in der dekantierten Flüssigkeit praktisch kein Aluminium und kein Chlorid mehr nachweisbar waren.

Auf dem Feststoff waren 14,6 mmol Titan fixiert.

Nach Aufnehmen in 100 ml Isooctan wurden bei Raumtemperatur unter Rühren 15 mmol n.Propylvanadat zugegeben. Die Suspension wurde dann 1 Stunde bei 50 °C gerührt. Nach Zugabe von 30 mmol $TiCl_4$ wurde auf 90 °C erwärmt und noch 1/2 Stunde gerührt. Nach dem Abkühlen auf 50 °C erfolgte ein erneuter Waschvorgang, bis im dekantierten Isooctan praktisch kein gelöstes Titan mehr nachweisbar war.

Der Katalysatorfeststoff enthielt insgesamt 14,5 mmol gebundenes Titan und 7,6 mmol gebundenes Vanadin.

c7) 100 ml der nach a) hergestellten Primärfeststoffsuspension, die 50 mmol Magnesium enthielten, wurden bei Raumtemperatur unter Rühren mit 15 mmol Tetra-isopropoxisilan versetzt, auf 50 °C erwärmt und 1 Stunde bei 50 °C gerührt. Nach Zugabe von 50 mmol $TiCl_4$ und Erwärmen auf 90 °C wurde 6 Stunden gerührt und analog b31) aufgearbeitet. Der Feststoff enthielt 12,4 mmol gebundenes Titan.

c8) 100 ml der nach a) hergestellten Primärfeststoffsuspension, die 50 mmol Magnesium enthielten, wurden bei Raumtemperatur unter Rühren mit 5 mmol Tetra-t.butoxi-titanat versetzt, auf 50 °C erwärmt und 1 Stunde bei 50 °C gerührt. Nach Zugabe von 20 mmol $TiCl_4$ und Erwärmen auf 90 °C wurde 3 Stunden gerührt und analog b31) aufgearbeitet. Der Feststoff enthielt 15,2 mmol gebundenes Titan.

c9) Die 1. Stufe der Katalysatorbereitung erfolgte wie unter b29).

Nach Aufnehmen in 100 ml Isooctan wurden bei Raumtemperatur unter Rühren 15 mmol Tetra-n.butoxisilan zugegeben. Die Suspension wurde dann 1 Stunde bei 50 °C gerührt. Nach Zugabe von 40 mmol $TiCl_4$ wurde auf 95 °C erwärmt und eine weitere Stunde gerührt. Nach dem Abkühlen auf 50 °C wurde der Feststoff analog b29) gewaschen. Die weitere Behandlung des Feststoffes erfolgte wie unter b30) beschrieben. Er enthielt insgesamt 18,8 mmol gebundenes Titan.

## Beispiele 1 bis 84 und Vergleichsversuch A bis P

Die Polymerisation von Äthylen wurd in einem 5-l-Laborautoklaven in 3.500 ml Isooctan unter Rühren bei 650 $min^{-1}$ und 10 bar Gesamtdruck durchgeführt.

In den Tabellen 1, 2 und 3 sind die Versuche mit dem Polymerisationsergebnis zusammengefaßt.

Während sich die Produkte der Beispiele 1 bis 84 "schmelzbruchfrei" extrudieren ließen, zeigten die Extrudate der Vergleichsversuche A bis P starken Schmelzbruch.

Tabelle 1

| Beispiele und Vergleichsversuche | Katalysator hergestellt | mgTi 1) | 2 ml $AlR_3$ |
|---|---|---|---|
| 1 | b) 1. | 18 | Al-isoprenyl |
| 2 | " | 18 | " |
| 3 | b) 2. | 18 | " |
| 4 | " | 18 | " |
| 5 | " | 18 | $Al(n-C_8H_{17})_3$ |
| 6 | b) 3. | 15,1 | Al-isoprenyl |
| 7 | b) 4. | 18 | " |
| 8 | " | 19,5 | " |
| 9 | " | 18 | $Al(n-C_8H_{17})_3$ |
| 10 | b) 5. | 15 | Al-isoprenyl |
| 11 | " | 15 | " |
| 12 | " | 20 | " |
| 13 | b) 6. | 18,4 | " |
| 14 | " | 18,4 | " |
| 15 | b) 7. | 16,5 | " |
| 16 | " | 16,5 | " |
| 17 | " | 17,4 | $Al(n-C_8H_{17})_3$ |
| 18 | " | 18,8 | " |
| 19 | b) 8. | 16,6 | Al-isoprenyl |
| 20 | " | 16,6 | " |
| 21 | " | 16,5 | " |
| 22 | " | 16,8 | " |
| 23 | " | 18,0 | $Al(n-C_8H_{17})_3$ |
| 24 | b) 9. | 17,2 | Al-isoprenyl |
| 25 | " | 17,5 | " |
| 26 | b) 10. | 16,3 | " |
| 27 | " | 15,4 | $Al(n-C_8H_{17})_3$ |
| 28 | b) 11. | 19,0 | Al-isoprenyl |
| 29 | " | 17,1 | " |
| 30 | b) 12. | 16,1 | " |
| 31 | " | 15,2 | $Al(n-C_8H_{17})_3$ |
| 32 | b) 13. | 14,9 | Al-isoprenyl |
| 33 | " | 13,8 | $Al(n-C_8H_{17})_3$ |
| 34 | b) 14. | 16,1 | " |
| 35 | " | 16,1 | Al-isoprenyl |
| 36 | " | 16,1 | " |
| 37 | b) 15. | 16,0 | " |
| 38 | " | 18,0 | " |
| A | c) 1. | 9,2 | Al-isoprenyl |
| B | " | 9,2 | $Al(n-C_8H_{17})_3$ |
| C | c) 2. | 10,1 | Al-isoprenyl |
| D | " | 10,1 | $Al(n-C_8H_{17})_3$ |
| E | c) 3. | 8,0 | Al-isoprenyl |
| F | " | 8,0 | $Al(n-C_8H_{17})_3$ |
| G | c) 4. | 12,5 | Al-isoprenyl |
| H | c) 5. | 9,1 | " |
| I | " | 9,1 | $Al(n-C_8H_{17})_3$ |

0036211

Tabelle 1

| Beispiele und Vergleichsversuche | Vol.% $H_2$ im Gasraum | °C | Zeit in Std. | gPE 2) |
|---|---|---|---|---|
| 1 | 24 | 90 | 1 1/2 | 1190 |
| 2 | 19 | " | " | 1200 |
| 3 | 21 | " | " | 1170 |
| 4 | 26 | " | 1 3/4 | 1205 |
| 5 | 24 | " | " | 1250 |
| 6 | 20 | " | " | 1100 |
| 7 | 19 | " | 2 | 1210 |
| 8 | 30 | " | 1 3/4 | 1110 |
| 9 | 25 | " | " | 1150 |
| 10 | 24 | " | 2 | 1205 |
| 11 | 16 | " | " | 1270 |
| 12 | 25 | " | 1 3/4 | 1125 |
| 13 | 20 | " | " | 1185 |
| 14 | 26 | " | " | 1195 |
| 15 | 27 | " | 1 1/2 | 1140 |
| 16 | 29 | " | " | 1150 |
| 17 | 24 | " | 1 3/4 | 1175 |
| 18 | 26 | " | 1 1/2 | 1140 |
| 19 | 27 | " | 1 3/4 | 1190 |
| 20 | 30 | " | 1 1/2 | 1120 |
| 21 | 26 | " | 1 3/4 | 1160 |
| 22 | 22 | " | 1 1/2 | 1150 |
| 23 | 30 | " | 1 3/4 | 1120 |
| 24 | 26 | " | " | 1110 |
| 25 | 23 | " | " | 1180 |
| 26 | 27 | " | 1 1/2 | 1240 |
| 27 | 24 | " | " | 1155 |
| 28 | 26 | " | " | 1170 |
| 29 | 23 | " | 1 3/4 | 1312 |
| 30 | 24 | " | 1 1/2 | 1180 |
| 31 | 21 | " | " | 1240 |
| 32 | 25 | " | " | 1190 |
| 33 | 21 | " | 1 3/4 | 1215 |
| 34 | 22 | " | 1 1/4 | 1175 |
| 35 | 27 | " | " | 1130 |
| 36 | 34 | " | 1 3/4 | 1120 |
| 37 | 22 | " | 1 1/2 | 1185 |
| 38 | 34 | " | 1 3/4 | 1180 |
| A | 30 | 85 | 1 1/2 | 1080 |
| B | 30 | " | " | 1060 |
| C | 21 | 90 | " | 1120 |
| D | 21 | " | " | 1080 |
| E | 22 | " | " | 1180 |
| F | 22 | " | " | 1090 |
| G | 19 | " | " | 1240 |
| H | 21 | " | " | 1200 |
| I | 21 | " | " | 1140 |

Tabelle 1

| Beispiele und Vergleichsversuche | $MFI_5/F_{21,6}$ (Pulver) | $MFI_5/F_{21,6}$ (Granulat) | Schüttdichte g/l | Feinanteil < 100 µm in % |
|---|---|---|---|---|
| 1 | 0,66/15,5 | 0,63/18,3 | 415 | 0,1 |
| 2 | 0,28/16,4 | 0,25/18,1 | 420 | 0,1 |
| 3 | 0,35/16,6 | 0,33/19,3 | 425 | 0,2 |
| 4 | 0,61/15,1 | 0,58/18,3 | 435 | 0,1 |
| 5 | 0,19/16,8 | 0,17/18,9 | 420 | 0,1 |
| 6 | 0,63/15,2 | 0,54/18,1 | 405 | 0,1 |
| 7 | 0,26/17,3 | 0,24/19,6 | 375 | 0,1 |
| 8 | 1,3/15,4 | 0,1/19,3 | 375 | 0,2 |
| 9 | 0,45/16,9 | 0,38/19,3 | 380 | 0,0 |
| 10 | 0,66/14,5 | 0,6/17 | 430 | 0,0 |
| 11 | 0,33/14,8 | 0,27/17,5 | 420 | 0,0 |
| 12 | 1,1/14,2 | 0,98/16,6 | 435 | 0,2 |
| 13 | 0,36/15,8 | 0,34/17,9 | 395 | 0,0 |
| 14 | 0,56/15,4 | 0,46/17,1 | 395 | 0,2 |
| 15 | 0,38/17,4 | 0,37/20,3 | 365 | 0,1 |
| 16 | 0,56/16,6 | 0,54/20,2 | 370 | 0,1 |
| 17 | 0,15/19,3 | 0,15/19,3 | 385 | 0,0 |
| 18 | 0,38/17,6 | 0,37/19,7 | 400 | 0,2 |
| 19 | 0,23/18,3 | 0,20/20,5 | 405 | 0,0 |
| 20 | 0,56/17,0 | 0,50/21,6 | 390 | 0,2 |
| 21 | 0,48/17,3 | 0,44/20,5 | 420 | 0,0 |
| 22 | 0,17/18,8 | 0,17/19,4 | 415 | 0,1 |
| 23 | 0,55/17,1 | 0,53/20,2 | 425 | 0,1 |
| 24 | 0,39/16,9 | 0,35/18,9 | 395 | 0,0 |
| 25 | 0,18/18,3 | 0,18/18,9 | 377 | 0,1 |
| 26 | 0,42/18,6 | 0,34/20,6 | 360 | 0,0 |
| 27 | 0,21/19,5 | 0,17/21,8 | 355 | 0,0 |
| 28 | 0,38/19,2 | 0,27/21,9 | 396 | 0,0 |
| 29 | 0,25/19,2 | 0,19/21,1 | 399 | 0,0 |
| 30 | 0,46/17,4 | 0,44/20,0 | 390 | 0,1 |
| 31 | 0,27/17,8 | 0,25/19,8 | 390 | 0,1 |
| 32 | 0,65/16,3 | 0,54/19,8 | 375 | 0,2 |
| 33 | 0,23/17,0 | 0,19/19,5 | 380 | 0,1 |
| 34 | 0,24/17,9 | 0,20/19,5 | 360 | 0,2 |
| 35 | 0,48/17,9 | 0,44/20,7 | 375 | 0,2 |
| 36 | 1,30/16,9 | 1,20/20,6 | 385 | 0,0 |
| 37 | 0,31/19,4 | 0,28/20,7 | 413 | 0,0 |
| 38 | 1,40/17,5 | 1,10/24,8 | 417 | 0,2 |
| A | 1,4/14,3 | - | 370 | 0,6 |
| B | 0,52/14,8 | - | 360 | 0,5 |
| C | 0,8/12,4 | - | 370 | 0,1 |
| D | 0,4/13,1 | - | 375 | 0,1 |
| E | 1,1/11,5 | - | 360 | 0,3 |
| F | 0,7/12,1 | - | 350 | 0,2 |
| G | 0,37/15,8 | - | 445 | 0,0 |
| H | 0,90/12,0 | - | 390 | 0,2 |
| I | 0,55/13,0 | - | 380 | 0,3 |

1) gebunden auf dem Katalysatorfeststoff
2) Polyäthylen

Tabelle 2

| Beispiele und Vergleichsversuche | Katalys. hergestellt nach | mgTi 1) | 2 ml $AlR_3$ | Vol.-% $H_2$ im Gasraum | °C | Zeit in Stunden | g PE 2) | $MFI_5/F_{21,6}$ (Pulver) | $MFI_5/F_{21,6}$ (Granulat) | Schüttdichte g/l | Feinanteil < 100 µm in % |
|---|---|---|---|---|---|---|---|---|---|---|---|
| 39 | b16) | 16,5 | Al-isoprenyl | 30 | 90 | 1 1/2 | 1250 | 1,1 /19,5 | 1,0 /21,8 | 355 | 0,2 |
| 40 | " | 12 | " | 26,5 | " | 1 1/2 | 1200 | 0,65/21,7 | 0,64/21,1 | 350 | 0,1 |
| 41 | b17) | 16,2 | $Al(n-C_8H_{17})_3$ | 23,5 | " | 1 1/2 | 1275 | 0,47/15,7 | 0,42/18,9 | 350 | 0,1 |
| 42 | " | " | Al-isoprenyl | 18,0 | " | 1 1/2 | 1300 | 0,24/17,5 | 0,21/20,5 | 355 | 0 |
| 43 | " | " | " | 30 | " | 2 | 1230 | 0,98/17,4 | 0,94/19,4 | 370 | 0,1 |
| 44 | b18) | 18,1 | " | 29,5 | " | 2 | 1110 | 0,4 /18,3 | 0,36/19,4 | 440 | 0,1 |
| 45 | " | 19,6 | " | 23,5 | " | 1 3/4 | 1100 | 0,25/18,8 | 0,18/22,4 | 425 | 0,1 |
| 46 | " | 22 | $Al(n-C_8H_{17})_3$ | 37,5 | " | 1 3/4 | 1040 | 0,97/18,4 | 0,94/18,9 | 430 | 0 |
| 47 | b19) | 18 | Al-isoprenyl | 26,5 | " | 2 | 1110 | 0,35/16,6 | 0,33/18,3 | 430 | 0 |
| 48 | " | 24 | " | 33,5 | " | 2 | 1000 | 0,5 /17,5 | 0,45/18,6 | 435 | 0 |
| 49 | b20) | 17,7 | " | 20 | " | 2 | 1160 | 0,37/15,6 | 0,31/16,2 | 415 | 0 |
| 50 | b21) | 15,2 | " | 20 | " | 1 3/4 | 1195 | 0,5 /15,8 | 0,42/18,1 | 430 | 0,2 |
| 51 | " | 17,1 | " | 27,5 | " | 1 3/4 | 1250 | 1,3 /15,6 | 1,1 /17,2 | 440 | 0,1 |
| 52 | b22) | 20 | " | 23,5 | " | 1 1/2 | 1240 | 0,37/17,8 | 0,3/ 21 | 395 | 0 |
| 53 | " | " | " | 24,5 | " | 1 1/2 | 1185 | 0,52/18,5 | 0,48/21,9 | 390 | 0,1 |
| 54 | b23) | 18,6 | " | 23,5 | " | 1 1/2 | 1190 | 0,36/18,9 | 0,28/25 | 395 | 0 |
| 55 | " | " | " | 30,0 | " | 1 1/2 | 1150 | 0,67/19,4 | 0,62/21,6 | 405 | 0,2 |
| 56 | " | 19 | $Al(n-C_8H_{17})_3$ | 23,5 | " | 1 1/2 | 1200 | 0,36/17,2 | 0,30/19,7 | 385 | 0,1 |
| 57 | " | 20 | " | 26,5 | " | 1 3/4 | 1130 | 1,2 /16,8 | 1,0 /20,2 | 395 | 0 |
| 58 | b24) | 18,4 | Al-isoprenyl | 26,5 | " | 2 1/4 | 1140 | 0,41/18,3 | 0,35/20,6 | 405 | 0 |
| 59 | " | " | " | 20,0 | " | 1 3/4 | 1230 | 0,22/19,1 | 0,2 /19,5 | 400 | 0 |
| 60 | b25) | 18,9 | " | 23,5 | " | 1 1/4 | 1145 | 0,27/17,4 | 0,23/20,0 | 385 | 0 |
| 61 | " | " | " | 33,5 | " | 1 3/4 | 1095 | 1,0 /17,5 | 0,89/19,7 | 395 | 0 |
| 62 | b26) | 14,2 | " | 20 | " | 1 3/4 | 1225 | 0,44/15,2 | 0,34/19,1 | 395 | 0,2 |
| 63 | b27) | 18 | " | 24,5 | " | 1 3/4 | 1120 | 0,54/15,1 | 0,4 /18,9 | 365 | 0,1 |
| 64 | " | 20 | " | 31 | " | 1 3/4 | 1070 | 1,2 /15,9 | 1,0 /19,4 | 375 | 0 |
| 65 | b28) | 19 | " | 28 | " | 1 1/2 | 1080 | 0,53/16,4 | 0,46/18,6 | 405 | 0 |
| J | c6) | 13,5 | Al-isoprenyl | 24,5 | 90 | 1 3/4 | 1270 | 1,6 /11,9 | 1,3 /13,1 | 425 | 0,2 |

Tabelle 3

| Beispiele und Vergleichsversuche | Katalys. hergestellt nach | mgTi 1) | 2 ml $AlR_3$ | Vol.-% $H_2$ im Gasraum | °C | Zeit in Stunden | g PE 2) | $MFI_5/F_{21,6}$ (Pulver) | $MFI_5/F_{21,6}$ (Granulat) | Schüttdichte g/l | Feinanteil 100 um in % |
|---|---|---|---|---|---|---|---|---|---|---|---|
| 66 | b29) | 17,5 | Al-isoprenyl | 24 | 90 | 2 | 1095 | 0,19/18,4 | 0,18/21,6 | 360 | 0,2 |
| 67 | " | 18,9 | " | 27,5 | " | 1 1/2 | 1005 | 0,38/17,4 | 0,34/20,0 | 390 | 0,0 |
| 68 | b30) | 18,5 | " | 24 | " | 1 1/2 | 1190 | 0,22/16,4 | 0,21/19,0 | 360 | 0,0 |
| 69 | " | 20,3 | " | 35 | " | 2 | 1120 | 0,99/16,3 | 0,93/18,5 | 370 | 0,0 |
| 70 | " | 18,5 | " | 27,5 | " | 1 3/4 | 1182 | 0,41/17,1 | 0,39/18,2 | 370 | 0,1 |
| 71 | b31) | 15,6 | " | 18,0 | " | 1 1/2 | 1135 | 0,51/15,7 | 0,43/17,4 | 405 | 0,1 |
| 72 | " | 15,6 | $Al(n-C_8H_{17})_3$ | 29 | " | 2 | 1175 | 1,4 /15,1 | 1,1 /17,0 | 430 | 0,1 |
| 73 | b32) | 14 | Al-isoprenyl | 17,5 | " | 1 1/2 | 1245 | 0,31/16,5 | 0,24/18,8 | 410 | 0,3 |
| 74 | " | 14 | " | 24,0 | " | 1 1/2 | 1205 | 1,0 /15,3 | 0,9 /17,1 | 425 | 0,3 |
| 75 | b33) | 13,5 | " | 24,0 | " | 1 1/2 | 1210 | 0,5 /16,6 | 0,43/19,3 | 380 | 0,1 |
| 76 | " | 12 | $Al(n-C_8H_{17})_3$ | 22,0 | " | 1 1/2 | 1230 | 0,29/16,6 | 0,24/20,4 | 365 | 0,1 |
| 77 | " | 13,5 | Al-isoprenyl | 30 | " | 1 1/2 | 1130 | 1,4 /16,8 | 1,2 /18,3 | 390 | 0,2 |
| 78 | b34) | 19 | " | 27 | " | 1 3/4 | 1085 | 0,46/15,7 | 0,32/20,9 | 375 | 0,2 |
| 79 | b35) | 18 | " | 24 | " | 1 1/2 | 1185 | 0,27/17,8 | 0,23/20,0 | 405 | 0,1 |
| 80 | " | 18 | " | 37,5 | " | 1 3/4 | 1100 | 1,0 /17,4 | 1,0 /18,4 | 410 | 0,2 |
| 81 | b36) | 18,4 | " | 24 | " | 1 | 1170 | 0,29/19,3 | 0,26/21,2 | 415 | 0,1 |
| 82 | " | 18,4 | " | 31,5 | " | 1 3/4 | 1170 | 0,68/17,4 | 0,65/18,5 | 420 | 0,0 |
| 83 | b37) | 17,5 | " | 24 | " | 1 3/4 | 1265 | 0,33/16,7 | 0,3 /19,3 | 415 | 0,1 |
| 84 | " | 17,5 | " | 30 | " | 1 3/4 | 1185 | 1,1 /15,3 | 1,0 /18,2 | 420 | 0,2 |
| | | | | | | | | | | | |
| K | c7) | 10,4 | Al-isoprenyl | 22 | 90 | 1 1/2 | 1105 | 1,6 /13,1 | - | 370 | 0,2 |
| L | " | 10,4 | $Al(n-C_8H_{17})_3$ | 20 | " | 1 1/2 | 1210 | 0,5 /14,1 | 0,44/14,8 | 370 | 0,3 |
| M | c8) | 10,8 | Al-isoprenyl | 22 | " | 1 1/2 | 1160 | 1,4 /13,9 | 1,2 /14,6 | 380 | 0,1 |
| N | " | 10,8 | $Al(n-C_8H_{17})_3$ | 20 | " | 1 1/2 | 1220 | 0,4 /14,2 | - | 380 | 0,2 |
| O | c9.) | 14,0 | Al-isoprenyl | 20 | " | 1 | 1170 | 0,43/16,3 | 0,32/16,9 | 375 | 0,0 |
| P | " | 14,0 | " | 26,5 | " | 1 1/4 | 1225 | 1,0 /16,9 | 0,90/17,1 | 390 | 0,1 |

1) gebunden auf dem Katalysatorfeststoff
2) Polyethylen

Patentansprüche

1. Verfahren zur diskontinuierlichen oder kontinuierlichen Polymerisation von alpha-Olefinen in der Gasphase oder in Kohlenwasserstoffen als Dispergiermittel bei Drücken von 2 bis 40 bar und Temperaturen von 60 bis 100 °C, gegebenenfalls unter Verwendung von Wasserstoff als Molekulargewichtsregler in Gegenwart eines Feststoffes als Katalysator, der Elemente der IV. und/oder V. Nebengruppe(n) des Periodensystems der Elemente, Magnesium, Halogen, Sauerstoff und gegebenenfalls ein (weiteres) Element der II. und/oder III. Hauptgruppe(n) des Periodensystems enthält und mit Metallorganylverbindungen der II. und/oder III. Hauptgruppe(n) des Periodensystems aktiviert wird, dadurch gekennzeichnet, daß der anschließend in der Polymerisation von alpha-Olefinen noch zu aktivierende Katalysator durch Umsetzung eines Magnesium und Halogen enthaltenden Primärfeststoffes in zwei aufeinanderfolgenden Reaktionsstufen A und B hergestellt wird, wobei der Feststoff auf Basis von Magnesiumverbindung

   in Reaktionsstufe A mit Alkoxyverbindung(en) eines oder mehrerer Elemente(s) der I., II., III., IV., V. und/oder VI. Haupt- und/oder Nebengruppe(n) des Periodensystems und Halogen enthaltender(n) Metallverbindung(en) eines oder mehrerer Elemente(s) der IV. und/oder V. Nebengruppe(n) des Periodensystems behandelt wird und
   in Reaktionsstufe B mit Halogen enthaltender(n) Metallverbindung(en) von Elementen der IV. und/oder V. Nebengruppe(n) und mindestens einer Metallorganylverbindung der II. und/oder III. Hauptgruppe(n) des Periodensystems umgesetzt wird.

2. Verfahren nach Anspruch 1, dadurch gekennzeichnet, daß der Primärfeststoff aus in Kohlenwasserstoffen löslichen Magnesiumverbindungen und Chlorkohlenwasserstoff- und/oder Chlorkohlenstoffverbindungen mit 1 bis 6 Koh-

lenstoffatomen, von denen wenigstens eines mindestens 2 Chloratome direkt gebunden trägt, hergestellt wird.

3. Verfahren nach Anspruch 1 oder 2, dadurch gekennzeichnet, daß der Feststoff in Kohlenwasserstoffen dispergiert und in der Reaktionsstufe A mit Alkoxyverbindung(en) des Kaliums, Natriums , Magnesiums, Calciums, Zinks, Bors, Aluminiums, Siliciums, Zinns, Titans, Zirkons, Phosphors, Vanadins und/oder Schwefels, insbesondere des Siliciums und/oder des Bors und/oder des Aluminiums, welche mindestens eine sekundäre oder tertiäre Alkoxygruppe enthält (enthalten) und mit Halogen enthaltender(n) Metallverbindung(en) von Elementen der IV. und/oder V. Nebengruppe(n) des Periodensystems umgesetzt wird.

4. Verfahren nach Anspruch 3, dadurch gekennzeichnet, daß der Feststoff in der Reaktionsstufe A mit Alkoxyverbindung(en) von K, Na, Mg, Ca,Zn,B,Al,Si,Ti,Zr,P, V und/oder S und Titanverbindungen der allgemeinen Formel $X_aTi(OR^4)_{4-a}$ oder Gemischen der Titanverbindungen umgesetzt wird, in der X gleiche oder verschiedene Halogenatome, $R^4$ gleiche oder verschiedene geradkettige oder verzweigte Alkyl- und/oder Arylreste mit 1 bis 8 Kohlenstoffatomen und a 2, 3 oder 4 bedeuten.

5. Verfahren nach einem der Ansprüche 1 bis 4, dadurch gekennzeichnet, daß der Feststoff in der Reaktionsstufe B in Kohlenwasserstoffen suspendiert und mit Titanverbindungen der allgemeinen Formel $X'_bTi(OR^3)_{4-b}$ oder Gemischen der Titanverbindungen sowie aluminiumorganischen Verbindungen umgesetzt wird, wobei X' gleiche oder verschiedene Halogenatome, $R^3$ gleiche oder verschiedene geradkettige oder verzweigte Alkyl- und/oder Arylreste mit 1 bis 8 Kohlenstoffatomen und b 2, 3 oder 4 bedeuten.

6. Verfahren nach Anspruch 4 und 5, dadurch gekennzeichnet, daß als Titan-Verbindungen der allgemeinen Formeln $X_aTi(OR^4)_{4-a}$ und $X'_bTi(OR^3)_{4-b}$ Titantetrachlorid eingesetzt wird.

7. Verfahren nach einem der Ansprüche 1 bis 6, d a d u r c h g e k e n n z e i c h n e t, daß als aluminiumorganische Verbindungen Diäthylaluminiumchlorid, Äthylaluminiumsesquichlorid, Aluminiumisoprenyl, Aluminiumtri-n-octyl oder deren Gemische eingesetzt werden.

8. Verfahren nach einen der Ansprüche 1 bis 7, d a d u r c h g e k e n n z e i c h n e t, daß Reaktionsstufe B vor Reaktionsstufe A durchgeführt wird.

9. Verfahren nach einem der Ansprüche 1 bis 8, d a d u r c h g e k e n n z e i c h n e t, daß man den in den zwei Stufen bereiteten Katalysatorfeststoff bei der Polymerisation der alpha-Olefine mit aluminiumorganischen Verbindungen der allgemeinen Formel $AlR^{13}{}_zY_{3-z}$ oder Gemischen dieser Verbindungen aktiviert, worin $R^{13}$ gleiche oder verschiedene geradkettige oder verzweigte Alkyl- und/oder Arylreste mit 1 bis 20 Kohlenstoffatomen, Y Wasserstoff und/oder gleiche oder verschiedene Halogenatome, Alkoxy-, Aryloxy- und/oder Siloxygruppen mit jeweils 1 bis 20 Kohlenstoffatomen und z 2 oder 3 bedeuten.

10. Verfahren nach Anspruch 9, d a d u r c h g e k e n n z e i c h n e t, daß zum Aktivieren des Katalysatorfeststoffes Aluminium-tri-isobutyl, Aluminium-tri-n-octyl, Aluminiumisoprenyl oder deren Gemische eingesetzt werden.

BAD ORIGINAL

Europäisches Patentamt

**EUROPÄISCHER RECHERCHENBERICHT**

0036211

Nummer der Anmeldung
EP 81 10 1958

| EINSCHLÄGIGE DOKUMENTE | | | KLASSIFIKATION DER ANMELDUNG (Int Cl.³) |
|---|---|---|---|
| Kategorie | Kennzeichnung des Dokuments mit Angabe, soweit erforderlich, der maßgeblichen Teile | betrifft Anspruch | |
| D | DE - A - 2 640 679 (MONTEDISON)<br>* Ansprüche 1,3,4,8,9,13-15; Seite 10, Zeile 18 - Seite 11, Zeile 31 *<br>-- | 1,2,9, 10 | C 08 F 10/00<br>4/64<br>4/62<br>4/68 |
| D | DE - A - 2 600 593 (NIPPON OIL)<br>* Ansprüche 1-9 *<br>-- | 1,3,6, 9,10 | |
| D | DE - A - 2 365 235 (NIPPON OIL)<br>* Ansprüche 1-8 *<br>---- | 1,3,6, 9,10 | |

**RECHERCHIERTE SACHGEBIETE (Int. Cl.³)**

C 08 F 10/00-
10/14
110/00-
110/14
210/00-
210/16
4/68
4/64
4/62
4/60

**KATEGORIE DER GENANNTEN DOKUMENTE**

X: von besonderer Bedeutung
A: technologischer Hintergrund
O: nichtschriftliche Offenbarung
P: Zwischenliteratur
T: der Erfindung zugrunde liegende Theorien oder Grundsätze
E: kollidierende Anmeldung
D: in der Anmeldung angeführtes Dokument
L: aus andern Gründen angeführtes Dokument
&: Mitglied der gleichen Patentfamilie, übereinstimmendes Dokument

Der vorliegende Recherchenbericht wurde für alle Patentansprüche erstellt.

| Recherchenort | Abschlußdatum der Recherche | Prüfer |
|---|---|---|
| Den Haag | 25-06-1981 | WEBER |